Europäisches Patentamt

European Patent Office

Office européen des brevets

(19)

(11) Veröffentlichungsnummer: **0 123 921**
**B1**

(12) **EUROPÄISCHE PATENTSCHRIFT**

(45) Veröffentlichungstag der Patentschrift: **28.11.90**

(51) Int. Cl.⁵: **G 06 F 7/50**

(21) Anmeldenummer: **84103493.7**

(22) Anmeldetag: **29.03.84**

(54) **Parallelverknüpfungsschaltung mit verkürztem Übertragsdurchlauf.**

(30) Priorität: **31.03.83 DE 3311970**
**21.12.83 DE 3346241**

(43) Veröffentlichungstag der Anmeldung:
**07.11.84 Patentblatt 84/45**

(45) Bekanntmachung des Hinweises auf die
Patenterteilung:
**28.11.90 Patentblatt 90/48**

(84) Benannte Vertragsstaaten:
**AT BE CH DE FR GB IT LI NL SE**

(56) Entgegenhaltungen:
**US-A-3 100 835**

**IRE TRANSACTIONS ON ELECTRONIC
COMPUTERS, Band EC-9, Juni 1960, Seiten
226-231, New York, US; J. SKLANSKY: "
Conditional-sum addition logic"**

(73) Patentinhaber: **Siemens Aktiengesellschaft
Wittelsbacherplatz 2
D-8000 München 2 (DE)**

(72) Erfinder: **Nussbächer, Hans Klaus, Dipl.-Ing.
Strassbergerstrasse 12
D-8000 München 40 (DE)**

EP 0 123 921 B1

# EP 0 123 921 B1

**Beschreibung**

Die Erfindung betrifft eine Parallelverknüpfungsschaltung mit verkürztem Übertragsdurchlauf nach dem Oberbegriff des Patentanspruchs 1.

Die logische Verknüpfung zweier binärer Zahlen kann bekanntlich für alle vier Grundrechenarten auf die Addition der beiden Operanden zurückgeführt werden. Wenn dabei eine hobe Arbeitsgeschwindigkeit erforderlich ist, wird die Parallelverarbeitung der Serienverarbeitung vorgezogen. Bei der erstgenannten Berechnungsmethode werden die Bitfolgen der beiden Operanden in Gruppen, beispielsweise digit- oder byteweise, unterteilt und stellengerecht gleichzeitig miteinander verknüpft.

Einer völlig gleichzeitigen Verknüpfung steht jedoch die Verarbeitung der Überträge entgegen die gegebenenfalls von einer Gruppe in die nächste übertragen werden müssen, so daß deshalb die Verarbeitungszeit eines Paralleladdierers von der Durchlaufzeit der Überträge bestimmt wird.

Aus dem US-Patent 3 100 835 ist eine Schaltungsanordnung bekannt, die mit in einander entsprechende Bitgruppen von aufeinanderfolgenden Bitstellen unterteilten Operanden arbeitet. Zueinander gehörende Bitgruppen der Operanden werden jeweils einer Verknüpfungseinheit zugeführt, die den beiden möglichen Werten des jeweiligen Gruppeneingangsübertrages entsprechende alternative Gruppenausgangsüberträge und abhängig vom jeweils ermittelten tatsächlichen Gruppeneingangsübertrag die jeweiligen Teilsummen liefern. Die Schaltungsanordnung weist eine Entscheidungslogik auf, der sämtliche von den Verknüpfungseinheiten gebildeten jeweils alternativen Gruppenausgangsüberträge zugeführt werden, aus denen unter Berücksichtigung eines externen Eingangsübertrages die jeweils zu den einzelnen Verknüpfungseinheiten gehörenden tatsächlichen Gruppeneingangsüberträge und der Ausgangsübertrag der Schaltungsanordnung gebildet werden. Die Entscheidungslogik ist wiederum in Gruppen von jeweils fünf alternativen Ausgangsübertragspaaren gegliedert, wobei den jeweils ersten vier Ausgangsübertragspaaren jeweils eine logische Verknüpfungsschaltung zugeordnet ist, die jeweils abhängig von allen niederwertigeren Ausgangsübertragspaaren in Verbindung mit dem externen Eingangsübertrag bzw. dem von der vorhergehenden Gruppe ermittelten tatsächlichen Gruppeneingangsübertrag den jeweils zutreffenden Gruppeneingangsübertrag liefern, während dem jeweils höchstwertigen Ausgangsübertragspaar jeder Gruppe jeweils eine logische Verknüpfungsschaltung zugeordnet ist, die abhängig von den restlichen vier alternativen Ausgangsübertragspaaren der Gruppe ein alternatives Zwischenübertragspaar liefert. Jedem Zwischenübertragspaar ist eine weitere logische Verknüpfungsschaltung zugeordnet, von denen jede abhängig von den in den niederwertigeren Gruppen gebildeten alternativen Zwischenübertragspaaren und dem externen Eingangsübertrag den tatäschlichen Gruppeneingangsübertrag für die nächsthöhere Gruppe liefert.

Eine derartige Strukturierung der Entscheidungslogik erfordert eine Vielzahl von unterschiedlichen logischen Verknüpfungsschaltungen, da die Anzahl der zu verarbeitenden Signale nicht gleich groß ist, sondern innerhalb einer jeden Gruppe von Übertragspaar zu Übertragspaar ansteigt und die logischen Verknüpfungsschaltungen entsprechend immer komplexer werden. Entsprechend ist die Anzahl der in einer Gruppe zu verarbeitenden Übertragspaare begrenzt. Analoges gilt für die Ermittlung der tatsächlichen Gruppeneingangsüberträge für die höherwertigeren Gruppen. Eine derartige Entscheidungslogik wird daher mit zunehmender Länge der Operanden immer unübersichtlicher und komplexer. Hinzu kommt, daß die die endgültige Entscheidung über den jeweiligen Gruppeneingangsüberträg für die einzelnen Bitgruppen der Operanden herbeiführenden logischen Verknüpfungsschaltungen unabhängig voneinander arbeiten und daher eine Verknüpfung derselben Signale sich in unterschiedlichem Maße wiederholt. Entsprechend müssen die einzelnen Signale an mehrere logische Verknüpfungsschaltungen herangeführt werden, z.B. das niederwertigste Übertragspaar jeder Gruppe an alle logischen Verknüpfungsschaltungen der Gruppe und die alternativen Zwischenübertragspaare der niederwertigsten Gruppe an alle logischen Verknüpfungsschaltungen für die Ermittlung der jeweiligen Gruppeneingangsüberträge für die jeweils nächsthöhere Gruppe, was einen erheblichen Verdrahtungsaufwand und erhebliche Leitungslängen für die einzelnen Signalwege bedingt. Bei einer Realisierung in integrierter Schaltungstechnik verändert aber jedes zusätzliche Signal oder jede zusätzliche Last einer Gatterschaltung die Schaltzeiten sehr stark und die großen Leitungslängen bringen erhebliche Laufzeiten mit sich, so daß der durch die Struktur der Entscheidungslogik an sich zu erwartende Zeitgewinn wegen der nur geringen Anzahl von in Reihe wirkenden Gattern vielfach wieder aufgehoben wird.

Aufgabe der Erfindung ist es daher, eine Parallelverknüpfungsschaltung der oben genannten Art zu schaffen, die bei hoher Verarbeitungsgeschwindigkeit und übersichtlichem Aufbau mit einfachen logischen Verknüpfungsschaltungen günstiger für beliebig lange Operanden realisierbar ist.

Diese Aufgabe wird durch die kennzeichnenden Merkmale des Patentanspruches 1 gelöst. Bei dieser Anordnung werden die zu verknüpfenden Operanden ebenfalls in Gruppen aufgeteilt und für jede Gruppe zunächst die alternativen Ausgangsüberträge ermittelt. Die alternativen Ausgangsüberträge werden dann in der durchweg aus einfachen Auswahlschaltern aufgebauten Entscheidungslogik in Verbindung mit dem externen Eingangsübertrag zu den benötigten tatsächlichen Eingangsüberträgen für die einzelnen Verknüpfungseinheiten verarbeitet.

Die Auswahlieder dienen dabei zum einen der Auswahl zwischen alternativen Ausgangsüberträgen und zum anderen zum Verknüpfen von alternativen Ausgangsüberträgen mit anderen alternativen Ausgangsüberträgen, die als Auswahlsteuersignale wirken, was zu alternativen Zwischenergebnissen führt, die wiederum mit höherwertigen alternativen Ausgangsüberträgen alternativ verknüpft werden können. Auf diese Weise werden ebenfalls parallel arbeitende Gruppen gebildet, in denen zunächst jeweils die alternativen Gruppenausgangsüberträge mehrerer Verknüpfungseinheiten alternativ gebündelt werden, bis eine endgültige Entscheidung aufgrund der endgültigen Ergebnisse der vorhergehenden Bündelungsgruppen oder abhängig vom externen Eingangsübertrag getroffen werden kann. Diese Bündelungsgruppen sind aber nicht auf eine vorgegebene Anzahl von Gruppenausgangsüberträgen beschränkt, sondern sie wachsen bei konsequenter Ausnutzung bereits ermittelter Zwischenergebnisse bzw. endgültiger Eingangsüberträger in zunehmendem Maße an, das in der Zeit bis zum Vorliegen dieser Zwischenergebnisse oder Eingangsüberträge in zunehmendem Maße immer mehr Gruppenausgangsüberträge gebündelt werden können. Dabei ergibt sich für die Entscheidungslogik eine sehr einfache Struktur, die sich analog der Länge der Operanden ohne Rückwirkung auf die vorhergehenden Gruppen beliebig erweitern läßt. Außerdem wirken die einzelnen Zwischenergebnisse der endgültigen Eingangsüberträge mit Ausnahme gegebenenfalls des externen Engangsübertrages immer nur auf die nächstfolgende Bündelungsgruppe ein, so daß lange Verdrahtungswege und eine mehrfache Verknüpfung derselben Signale vermieden wird, wobei sich die logischen Verknüpfungsschaltungen auf einfache Auswahlschalter, die immer einen der alternativen Gruppenausgangsüberträge auswählen, reduzieren.

Durch den Aufsatz "Conditional-Sum Addition Logic" von Sklanski in IRE Transactions On Electronic Computers, June 1960, Seiten 226 bis 231, ist weiterhin ein Verfahren zur schnellen Addition von zwei binären Operanden bekannt, das auf der Bildung von alternativen Teilergebnissen und Eingangsüberträgen durch Verknüpfungseinheiten je Bitstelle und der fortlaufenden alternativen Auswahl bis zur endgültigen Entscheidung über die zutreffenden Teilergebnisse und Ausgangsüberträge durch Auswahlschalter in aufeinanderfolgenden Zeitstufen beruht. Im Hinblick auf das Ziel, dabei möglichst schnell zum endgültigen Ergebnis zu gelangen, werden hierbei Teilergebnisse und Ausgangsüberträge nicht getrennt verarbeitet, und es wird lediglich über die für die Gewinnung des endgültigen Ergebnisses und des Ausgangsübertrages notwendigen Ausgangsüberträge endgültig entschieden. Der Aufwand steigt daher bei zunehmender Länge der zu verarbeitenden Operanden wegen der überlagerten Verarbeitung der Teilergebnisse derartig an, daß eine unmittelbre Anwendung auf durch die Verknüpfungseinheiten zu verarbeitende Bitgruppen nicht wirtschaftlich möglich ist.

Würde man dagegen eine derartige Anordnung für jede der Bitgruppen vorsehen und diese Anordnungen kaskadieren, dann würde die gesamte Verarbeitungszeit mit jeder weiteren Bitgruppe um die Dauer einer Zeitstufe erhöht, was bei längeren Operanden mit vielen Bitgruppen keine so kurzen Verarbeitungszeiten ermöglicht, wie die vorliegende Erfindung.

Auch wenn man das Prinzip der "Conditional-Sum Addition" in den einzelnen Gruppen der Entscheidungslogik der aus dem genannten US-Patent bekannten Anordnung allein auf die Auswertung der alternativen Ausgangsüberträge der einzelnen Verknüpfungsschaltungen anwenden würde, bliebe der bereits erwähnte Nachteil des größeren Aufwandes bestehen. Außerdem könnten nicht alle zur Arbeitszeitverkürzung führenden Bündelungsmöglichkeiten wegen der Beschränkung der Größe der Gruppen voll ausgenutzt werden.

Weiterbildungen der Erfindung ergeben sich aus den Unteransprüchen. Dabei ist insbesondere die Bündelung von jeweils jedem zweiten alternativen Gruppenausgangsüberträg mit und ohne Eingangsübertrag mit nachfolgender weiterer Bündelung gemäß einer Modulo-2-Entwicklung vorteilhaft, weil dadurch die durchschnittliche Erfassung von alternativen Gruppenausgangsüberträgen und alternativen Zwischenergebnissen auf dem Weg zum Erhalt aller tatsächlichen Gruppeneingangsüberträge am größen ist.

Im folgenden wird die Erfindung anhand von Ausführungsbeispielen unter Bezugnahme auf die Zeichnung näher beschrieben. Dabei zeigen

FIG 1 ein Blockschaltbild de Parallelverknüpfungsschaltung für zwei Operanden,

FIG 2 die Verknüpfung zweier Operanden anhang einer Tabelle,

FIG 3 die Auswahl und Bildung der Überträge in der Entscheidungslogik nach FIG 1 anhand einer Tabelle

FIG 4 ein Ausführungsbeispiel der Entscheidungslogik,

FIG 5 eine Teilschaltung einer Verknüpfungseinheit,

FIG 6 und 7 vorteilhafte Ausführungsbeispiele für die Verknüpfungseinheiten von FIG 1,

FIG 8a, 8b die Verknüpfung zweier Operanden in einer Entscheidungslogik in allgemeiner Form anhand einer Tabelle,

FIG 9a, 9b, 9c den strukturellen Aufbau einer Entscheidungslogik entsprechend der Tabelle von FIG 9,

FIG 10 und 11 je ein weiteres Beispiel für eine Entscheidungslogik und

FIG 12 eine Schaltungsanordnung zur Fehlererkennung.

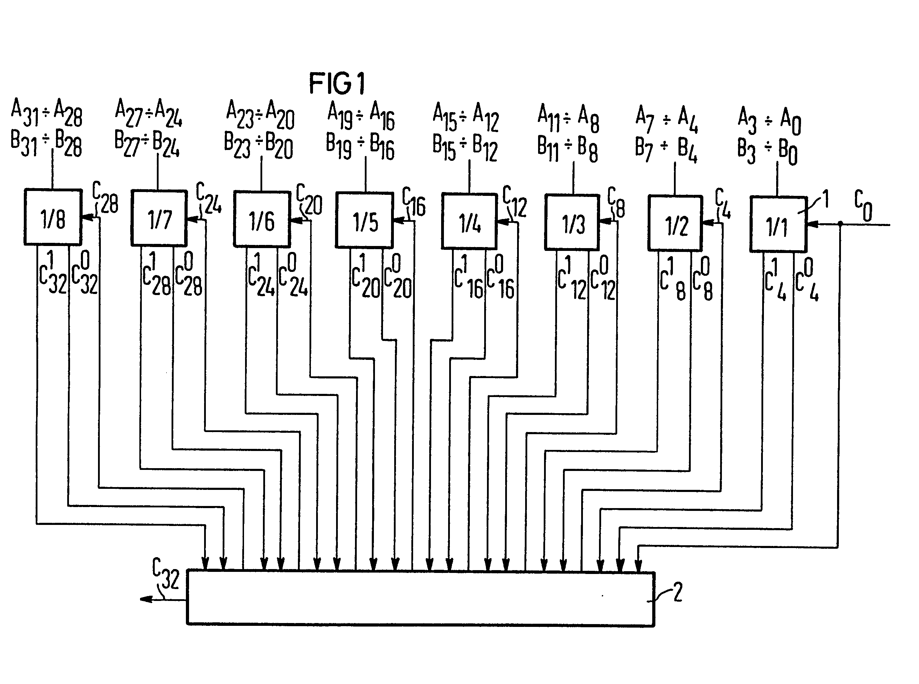

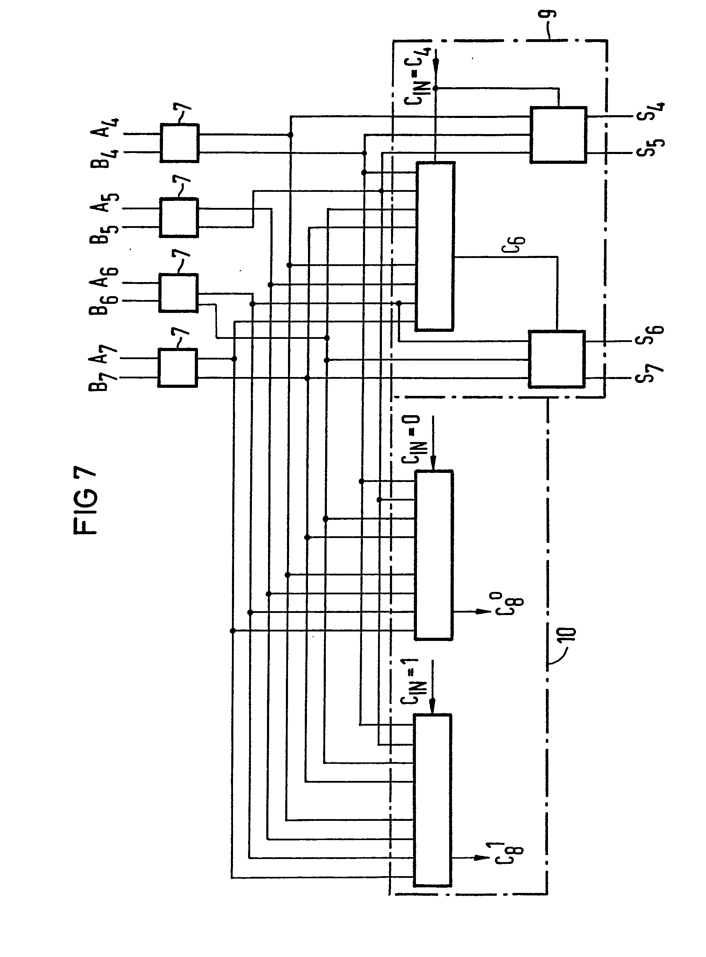

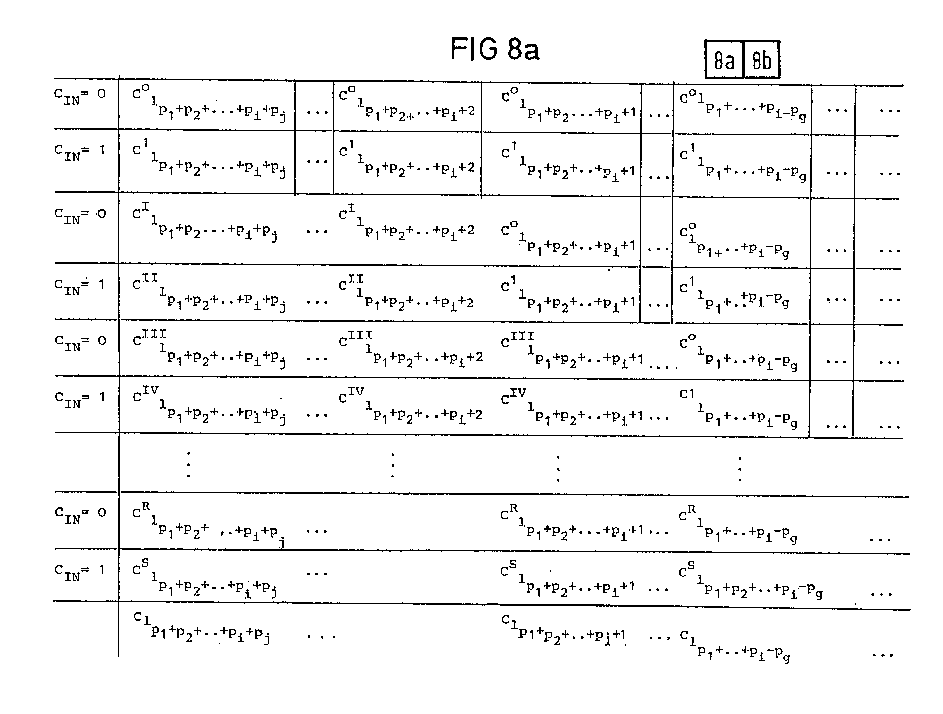

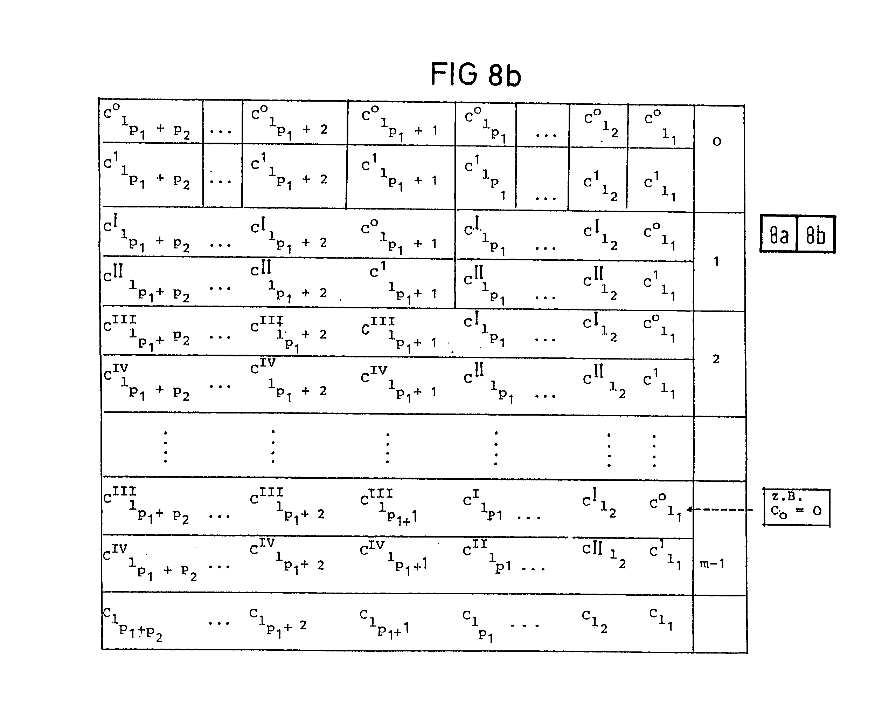

Das Blockschaltbild in FIG 1 zeigt acht parallelgeschaltete Verknüpfungseinheiten 1/1 bis 1/8 zur Addition zweier binär codierter Operanden A und B zum Ableiten von zwei alternativen Gruppenausgangsüberträgen $C^0_i$ und $C^1_i$, sowie eine nachgeschaltete Entscheidungslogik 2 zur Ermittlung der für die einzelnen Verknüpfungseinheiten 1/1 bis 1/8 erforderlichen tatsächlichen Gruppeneingangsüberträge, deren Ausgänge auf die Verknüpfungseinheiten zurückgeführt sind. Die beiden Operanden A und B sind den Verknüpfungseinheiten 1/1 bis 1/8 digitweise als Bitfolge zugeführt, wobei jeweils Bitgruppen mit jeweils vier Bits aus beiden Operanden, beispielsweise $A_0$ bis $A_3$ und $B_0$ bis $B_3$, $A_4$ bis $A_7$ und $B_4$ bis $B_7$ usw. gebildet werden. In jeder Verknüpfungseinheit 1/1 bis 1/8 werden unter Anlegen zweier komplementärer Eingangsüberträge zwei alternative Gruppenausgangsüberträge $C^0_i$, $C^1_i$ ermittelt und der Entscheidungslogik 2 zugeführt. Die unteren Indizes i (i = 4, 8, 12, 16, 20, 28) bezeichnen die Stelle innerhalb der Bitfolge, an welcher sie auftreten. Die oberen Indizes 0 bzw. 1 geben an, daß der entsprechende Übertrag unter der Bedingung eines einlaufenden Übertrags $C_{IN}$ des Wertes 0 bzw. des Wertes 1 ermittelt wurde. Beispielsweise sind die als Ergebnis der Addition der ersten Bitgruppe $A_0$ bis $A_3$ und $B_0$ bis $B_3$ entstehenden alternativen Gruppeneingangsüberträge mit $C^0_4$ bzw. $C^1_4$ bezeichnet. Die Entscheidungslogik 2 wählt aus den beiden alternativen Übertragsergebnissen das tatsächliche Ergebnis unter Berücksichtigung aller Überträge aus den niederwertigeren Bitgruppen aus, welches dann der jeweils nachfolgenden höherwertigen Bitgruppe zur Steuerung der Addition bzw. zur Auswahl von alternativen Teilsummen zugeführt ist. Dies ist im einzelnen in FIG 7 und FIG 8 beschrieben.

Beispielsweise ist der in der Entscheidungslogik 2 gebildete Gruppenausgangsübertrag $C_4$ der niederwertigsten Verknüpfungseinheit 1/1 an den Steuereingang der nächsthöherwertigen Verknüpfungseinheit 1/2 geführt. Ein bei der Addition der beiden Operanden A, B zu berücksichtigender externer Eingangsübertrag $C_0$ ist sowohl an den Steuereingang der niederwertigsten Verknüpfungseinheit 1/1 als auch an die Entscheidungslogik 2 geführt. Der höchstwertige in der Entscheidungslogik 2 ermittelte Ausgangsübertrag $C_{32}$ der Parallelverknüpfungsschaltung, welcher an der 32. Stelle der Bitfolge des Verknüpfungsergebnisses auftritt, kann von der Entscheidungslogik an eine weitere Schaltung der eben beschriebenen Art als externer Eingangsübertrag weitergeleitet werden.

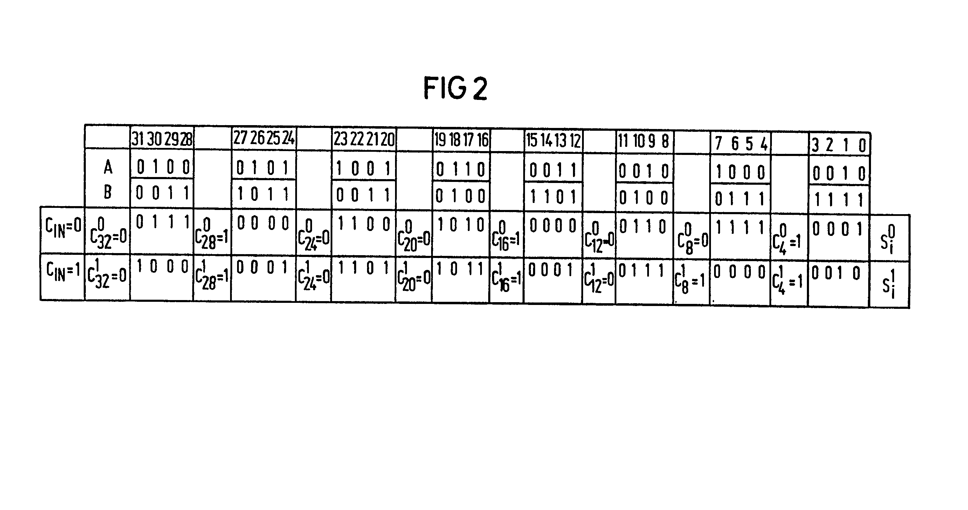

Anhand der Tabelle in FIG 2 wird im Folgenden die Funktion der Verknüpfungseinheiten 1/1 bis 1/8 näher erläutert.

Die beiden Operanden A, B bestehen jeweils aus einer Folge von 32 Bits, die mit steigender Wertigkeit entsprechend i = 0 bis 31 durchnumeriert sind. Die Bitfolgen sind hier in acht Bitgruppen mit je vier Bitstellen unterteilt. Wie im Zusammenhang mit FIG 1 bereits beschrieben, werden gleichzeitig für jede Bitgruppe unabhängig von den benachbarten Bitgruppen jeweils zwei alternative Teilsummen $S^0_i$, $S^1_i$ gebildet, wobei die Teilsumme $S^0_i$ unter der Annahme eines einlaufenden Übertrags des Wertes 0 und die Teilsumme $S^1_i$ unter der Annahme eines einlaufenden Übertrags des Wertes 1 gebildet wird ($C_{IN}$ = 0 bzw. $C_{IN}$ = 1). Die in den einzelnen Bitgruppen entstehenden Ausgangsüberträge sind bei einlaufenden Überträgen ($C_{IN}$ = 0 mit $C^0_i$ und bei einlaufenden Überträgen $C_{IN}$ = 1 mit $C^1_i$ bezeichnet, wobei hier i die Werte 4, 8, 12, 16, 20, 24, 28, 32 annimmt.

In der niederwertigsten, in der rechten Spalte wiedergegebenen Bitgruppe $A_0$ bis $A_3$ und $B_0$ bis $B_3$ weist der Operand A beispielsweise die Bitfolge 0010 und der Operand B die Bitfolge 1111 auf. Unter der Annahme, daß der einlaufende Übertrag 0 ist, besteht die Teilsumme aus der Bitfolge 0001 und der Gruppenausgangsübertrag $C^0_4$ hat den Wert 1. Unter der Annahme, daß der einlaufende Übertrag den Wert 1 hat, weist die Teilsumme die Bitfolge 0010 auf, und der Gruppenausgangsübertrag $C^1_4$ hat ebenfalls den Wert 1.

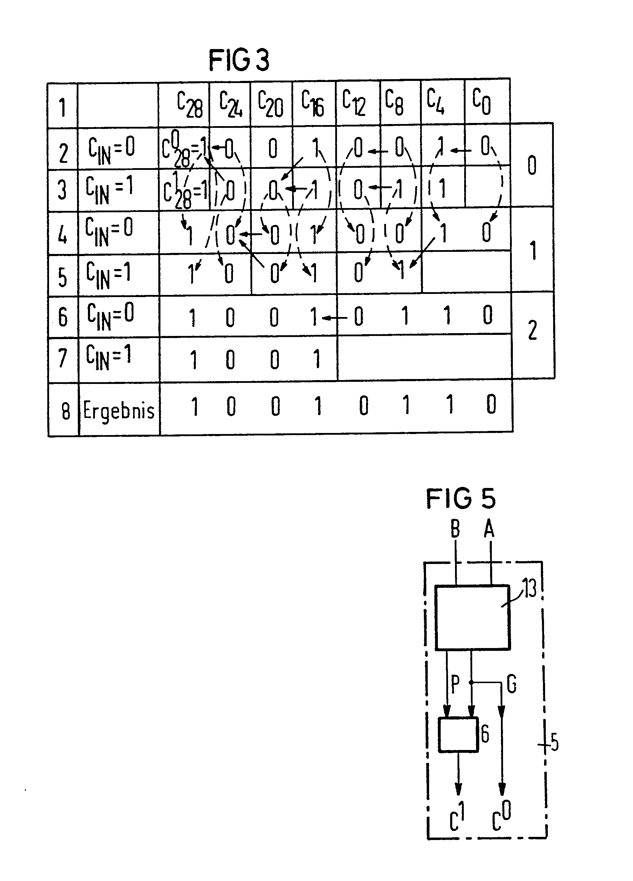

FIG 3 erläutert die Funktion der Entscheidungslogik 2, mit welcher aus den alternativen Gruppenausgangsüberträgen $C^0_i$ und $C^1_i$ jeweils der tatsächlich zutreffende Gruppenausgangsübertrag $C_i$ ausgewählt wird. Die Auswahl erfolgt in aufeinanderfolgenden Stufen 0, 1, 2 (rechte Randspalte). Um die Beschreibung zu vereinfachen, sind die Zeilen der Tabelle von 1 bis 8 durchnumeriert (linke Randspalte). Zeile 1 enthält die Bezeichnung für die Überträge, angefangen beim niederwertigsten einlaufenden Übertrag $C_0$ bis zum höchstwertigsten Ergebnisübertrag $C_{28}$, welcher bei der Summenbildung nach der 28. Stelle der Bitfolge entsteht und welche rals Eingangsübertrag bei der Summenbildung für die höchstwertigste Bitgruppe ($A_{28}$ bis $A_{31}$ und $B_{28}$ bis $B_{31}$) dient.

Die alternativen Überträge der Stufe 0 entsprechen den Gruppenausgangsüberträgen, die von den Verknüpfungseinheiten 1/1 bis 1/8 ermittelt und der Entscheidungslogik 2 zugeführt werden. In der Stufe 0 wird in dem dargestellten Beispiel von der Annahme ausgegangen, daß der in die niederwertigste erste Bitgruppe einlaufende bzw. der an der niederwertigsten Verknüpfungseinheit 1/1 anliegende externe Eingangsübertrag $C_0$ den Wert 0 hat, was durch den Eintrag dieses Wertes lediglich in Zeile 2 der Stufe 0 angedeutet ist.

In der Stufe 0 werden beispielsweise jeweils die aufeinanderfolgenden Überträge paarweise miteinander alternativ verknüpft, wobei entsprechend den ausgezogenen Pfeilen der jeweils zutreffende höherwertigere Übertrag ausgewählt und zusammen mit dem jeweils auswählenden niederwertigeren Übertrag entsprechend den gestrichelten Pfeilen als alternatives Zwischenergebnis entsprechend $C_{IN}$ = 0 und $C_{IN}$ = 1 in die nächste Stufe 1 als Zeile 4 bzw. 5 übernommen wird. In der darauffolgenden Stufe 1 werden dann aufeinanderfolgende Zwischenergebnisse wiederum paarweise miteinander verknüpft, indem entsprechend den ausgezogenen Pfeilen das jeweils zutreffende Zwischenergebnis ausgewählt und zusammen mit dem auswählenden Zwischenergebnis als alternatives Zwischenergebnis in die nächste Stufe 2 als Zeile 6 bzw. 7 übernommen wird, in der nun die endgültige Auswahl zwischen den beiden alternativen Zwischenergebnissen für die höherwertigere Hälfte entsprechend dem ausgezogenen Pfeil abhängig vom endgültigen Ausgangsübertrag $C_{12}$ der vorangehenden Bitgruppe getroffen werden kann.

**EP 0 123 921 B1**

Das sich daraus ergebende endgültige Ergebnis der tatsächlichen Ausgangsüberträge ist in Zeile 8 angegeben.

Ausgehend vom externen Eingangsübertrag $C_0$ kann man also Auswahlgruppen bilden, z.B. für die alternativen Überträge $C_4$ bzw. $C_8$ und $C_{12}$ bzw. $C_{16}$ bis $C_{28}$, in denen die ursprünglichen Überträge von Stufe zu Stufe alternativ miteinander verknüpft und so fortlaufend gebündelt werden, bis eine endgültige Auswahl für alle Überträge einer Auswahlgruppe möglich ist.

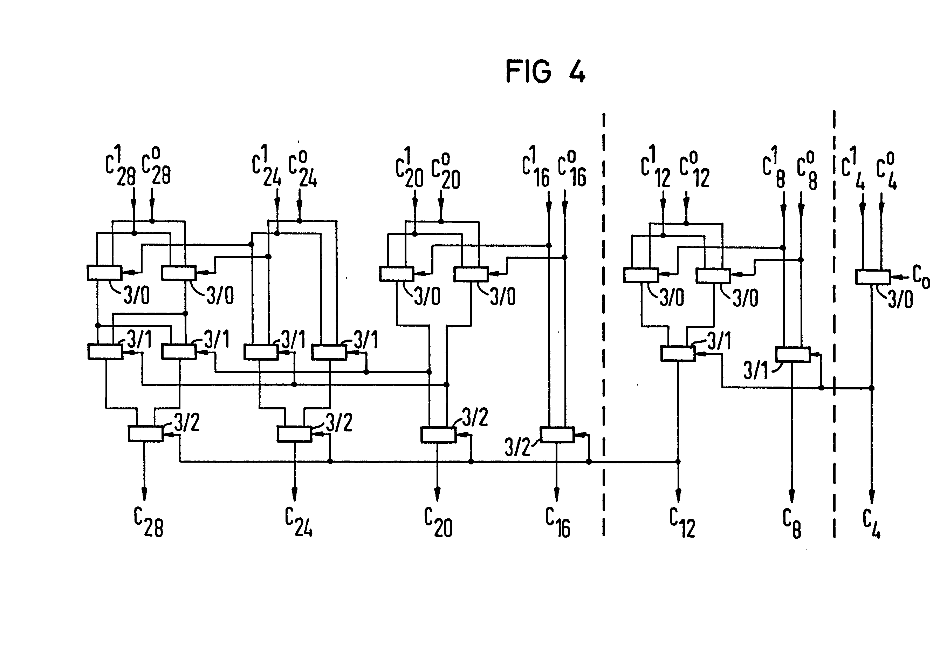

FIG 4 zeigt eine entsprechend strukturierte Entscheidungslogik mit den alternativen Gruppenausgangsüberträgen $C^0_4/C^1_4$ bis $C^0_{28}/C^1_{28}$ und dem externen Eingangsübertrag $C_0$ als Eingangssignale. Die Auswahl zwischen den jeweils alternativen Eingangssignalen wird durch einfache Auswahlschalter 3/ ... getroffen, von denen die jeweils gleichzeitig wirksam werdenden Auswahlschalter 3/0 bzw. 3/1 bzw. 3/2 jeweils eine der Stufen von FIG 3 zugeordnet sind, während die gestrichelten Trennungslinien die Unterteilung in Auswahlgruppen andeuten.

Mit dem externen Eingangsübertrag $C_0$ als Steuersignal für einen Auswahlschalter 3/0 kann in der ersten Auswahlgruppe unmittelbar der tatsächliche Ausgangsübertrag $C_4$ bestimmt werden. Gleichzeitig damit werden mit weiteren Auswahlschaltern 3/0 die übrigen Eingangssignale für jeweils zwei aufeinanderfolgende alternative Gruppenausgangsüberträge durch paarweise angeordnete Auswahlschalter gebündelt und alternative Zwischenergebnisse gebildet, die dann durch Auswahlschalter 3/1 in der nächsten Stufe ausgewählt werden. Das führt abhängig vom bereits vorliegenden endgültigen Ergebnis für den Ausgangsübertrag $C_4$ zur endgültigen Auswahl von $C_8$ und $C_{12}$ in der nächsten Auswahlgruppe und zu weiteren alternativen Zwischenergebnissen in der nachfolgenden Auswahlgruppe, so daß mit weiteren Auswahlschaltern 3/2 entsprechend Stufe 2 von FIG 3 abhängig vom endgültigen höchstwertigen Ergebnis der vorhergehenden Auswahlgruppe mit $C_{12}$ die endgültige Auswahl für die Ausgangsüberträge $C_{16}$ bis $C_{28}$ in der dritten Auswahlgruppe gleichzeitig getroffen werden kann.

Die Entscheidungslogik besteht also je alternativem Übertragspaar aus wenigstens einem die endgültige Entscheidung treffenden Auswahlschalter, z.B. 3/0 für den Ausgangsübertrag $C_4$, und diesem gegebenenfalls vorgeschalteten Paaren von Auswahlschaltern zur Ermittlung alternativer Zwischenergebnisse durch Bündelung alternativer Überträge und/oder Zwischenergebnisse.

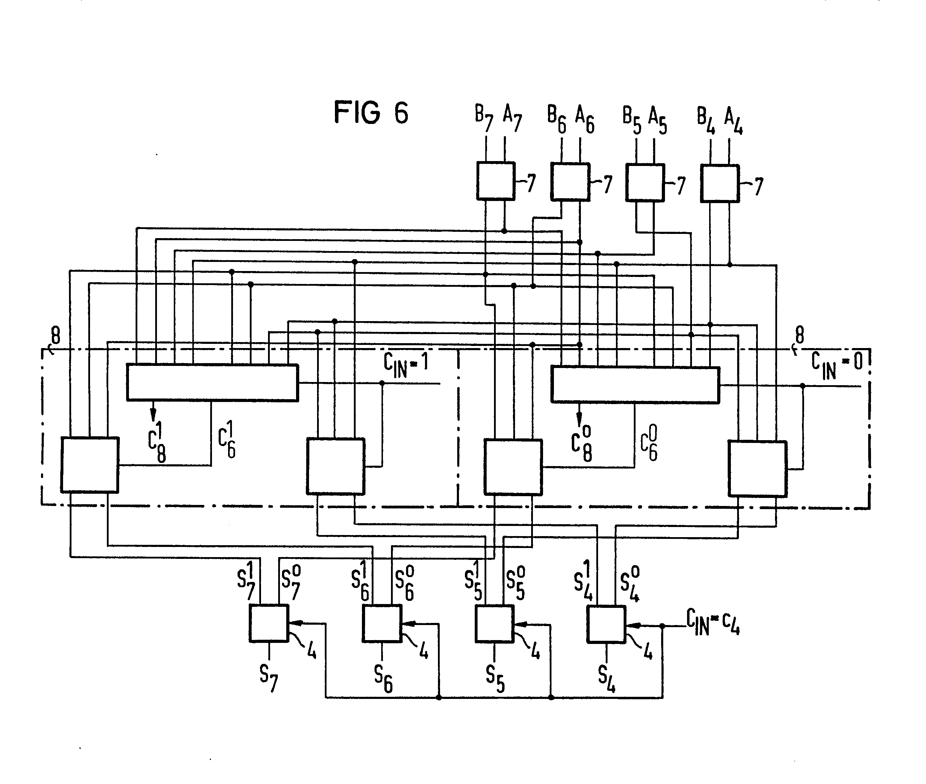

FIG 5 zeigt eine teilschaltung 5 der Verknüpfungseinheit 1 zur Ermittlung der alternativen Gruppenausgangsüberträge bei der Verknüpfung zweier Operanden A und B, welche parallel an den Dateneingängen anliegen. Am Ausgang P eines logischen Schaltkreises 13 ist ein Wert abgreifbar, welcher aus der "ODER"-Verknüpfung der Operanden A und B entsteht. Am Ausgang G ist ein Wert abgreifbar, welcher aus der "UND"-Verknüpfung der beiden Operanden entsteht. Die Verknüpfungen erfolgen jeweils bitweise. Ein aus der Verknüpfung der Operanden A, B entstehender Übertrag $C^0$, das heißt unter der Annahme eines Eingangsübertrages des Wertes 0, entspricht dem am Ausgang G anliegenden Wert. Ein Übertrag $C^1$, das heißt unter der Annahme eines Eingangsübertrages des Wertes 1, wird durch eine "ODER"-Verknüpfung der Ausgangsgrößen P und G in einem Schaltkreis 6 erhalten.

In FIG 6 und FIG 7 sind Beispiele für die vollständige Schaltung der Verknüpfungseinheiten 1 wiedergegeben.

Die in FIG 6 dargestellte Verknüpfungseinheit 1 dient sowohl zur Addition zweier als Bitfolgen mit jeweils vier Bits dargestellter Operanden A und B, wobei die einzelnen Bits mit $A_4$, $B_4$, $A_5$, $B_5$, usw. bezeichnet sind, als auch zum Erzeugen zweier alternativer, bedingter Überträge $C^1_8$, $C^0_8$. Die gewählten Bezeichnungen entsprechen denen für die zweitniedrigste Bitgruppe gemäß FIG 1. Die Bits gleicher Wertigkeit werden zunächst jeweils einstelligen Addierern 7 zugeführt, deren Summen und Übertragsausgänge parallel den zwei weiteren Addierwerken 8 zugeführt werden. Diese beiden Addierwerke 8 arbeiten unabhängig voneinander, wobei beide mit fest eingeprägten komplementären Eingangsüberträgen $C_{IN} = 0$ bzw. $C_{IN} = 1$ beaufschlagt sind. Derartige Addierwerke 8 sind unter der Bezeichnung "Einfache Ripple-Carry-Addierer" bekannt. Jedes dieser beiden Addierwerke 8 weist vier Ausgänge für jeweils ein Bit auf. Das eine Addierwerk 8 mit dem einlaufenden Übertrag $C_{IN}$ des Wertes 0 erzeugt eine Summenbitfolge, deren Bits mit $S^0_4$, $S^0_5$, $S^0_6$, $S^0_7$ bezeichnet sind. Das andere Addierwerk mit dem einlaufenden Übertrag $C_{IN}$ des Wertes 1 erzeugt eine alternative Summenbitfolge, deren Bits mit $S^1_4$, $S^1_5$, $S^1_6$, $S^1_7$ bezeichnet sind. Außerdem erzeugen die beiden Addierer 8 jeweils einen Übertrag, welcher mit $C^0_8$ bzw. $C^1_8$ bezeichnet ist.

Die Bits gleicher Wertigkeit der beiden alternativen Bitfolgen werden paarweise den Dateneingängen von Auswahlschaltern 4 zugeführt, welche aus jedem Paar ein Ergebnis-Summenbit auswählen. Die Auswahl erfolgt durch Ansteuerung am Steuereingang durch einen Eingangsübertrag $C_4$, der mittels der Entscheidungslogik 2 aus den beiden Überträgen $C^0_4$ und $C^1_4$ der niederwertigsten Bitgruppe ausgewählt wird. Die Summenbits der ausgewählten Bitfolge sind mit $S_4$, $S_5$, $S_6$ und $S_7$ bezeichnet und bilden die Teilsumme für diese Bitgruppe.

FIG 7 zeigt ein weiteres Beispiel einer Verknüpfungseinheit 1, das neben den 1-Bit-Addierern 7 aus zwei weiteren Addierwerken 9 und 10 besteht. Dabei bildet das Addierwerk 9 aus den beiden am Eingang liegenden Bitfolgen $A_4$, $B_4$, $A_5$, $B_5$ usw. unter Berücksichtigung eines einlaufenden Übertrages $C_{IN} = C_4$ unmittelbar die endgültige Summenbitfolge $S_4$, $S_5$, $S_6$, $S_7$, während das andere Addierwerk 10 lediglich die beiden alternativen Gruppenausgangsüberträge $C^0_8$ und $C^1_8$ ermittelt.

FIG 8a und 8b zeigen tabellarisch in allgemeiner Form die Bündelung alternativer Gruppenausgangsüberträge für eine beliebige Anzahl von Bitgruppen. Die den Bitgruppen zugehörigen

5

Überträge sind mit unteren Indizes von $1_1$, $1_2$ bis $1_{p1 + p2 + \ldots + pi + pj}$ bezeichnet. Die oberen Indizes 0 bzw. 1 geben wie in der Tabelle von FIG 2 an, ob der entsprechende Übertrag unter der Annahme eines Eingangsübertrags des Wertes 0 bzw. 1 ermittelt wurde. Die Ermittlung der Ergebnisüberträge erstreckt sich von der Stufe 0 bis zur Stufe m − 1, was in der rechten Randspalte der Figuren wiedergegeben ist. In der letzten stufe m − 1 werden die alternativen Ergebnisse abhängig vom Wert des Eingangsübertrags $C_0$ ausgewählt. Im dargestellten Beispiel hat der Eingangsübertrag $C_0$ den Wert 0, so daß die entsprechenden Überträge für $C_{IN} = 0$ als Ergebnisüberträge übernommen werden, was durch einen gestrichelten Pfeil am rechten Rand von FIG 8a und die Wiedergabe in der letzten Zeile der Tabelle veranschaulicht ist.

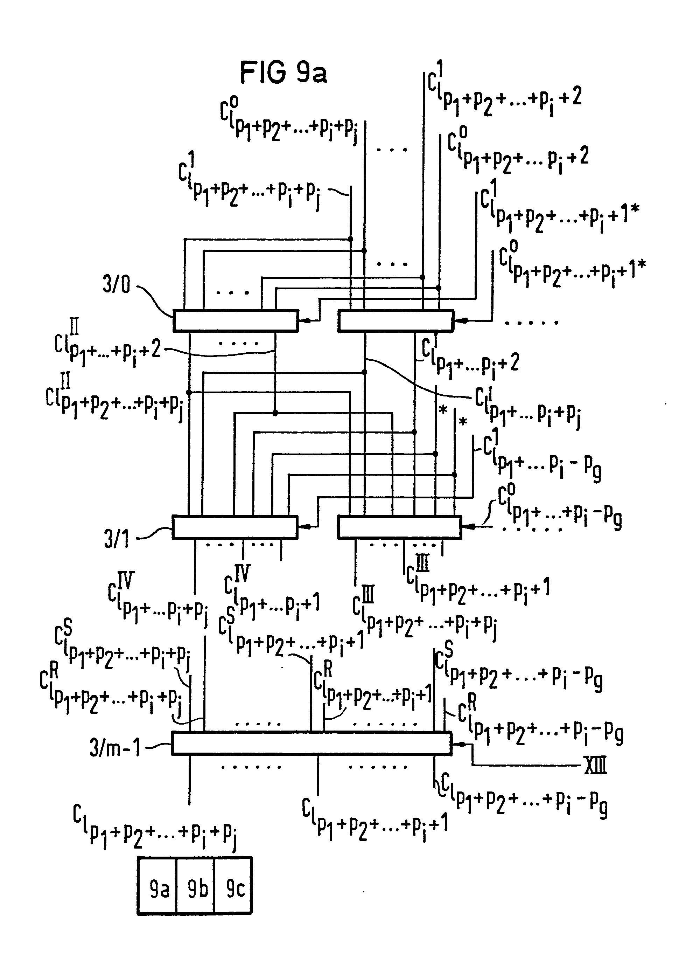

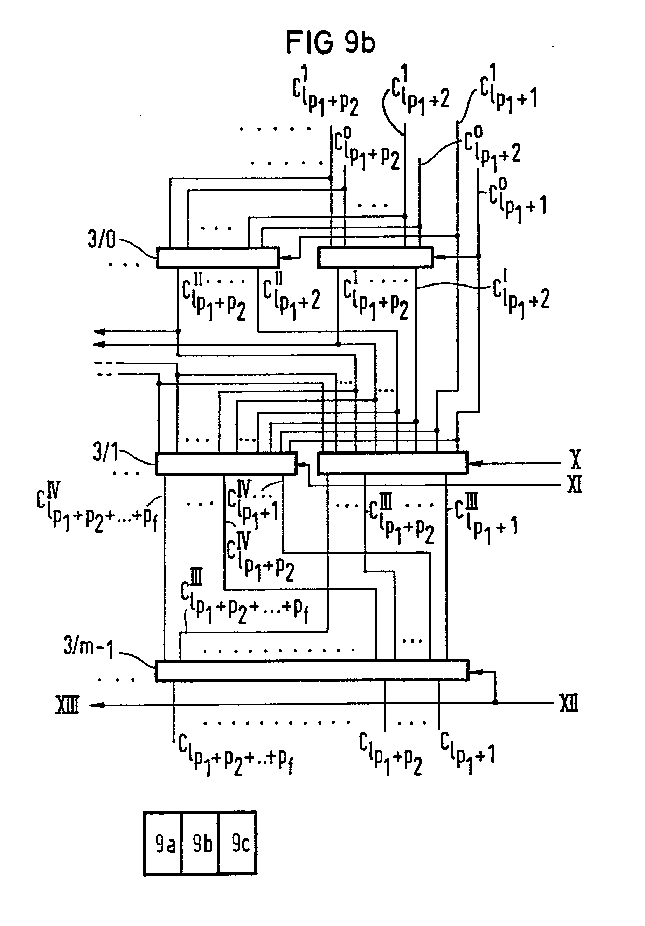

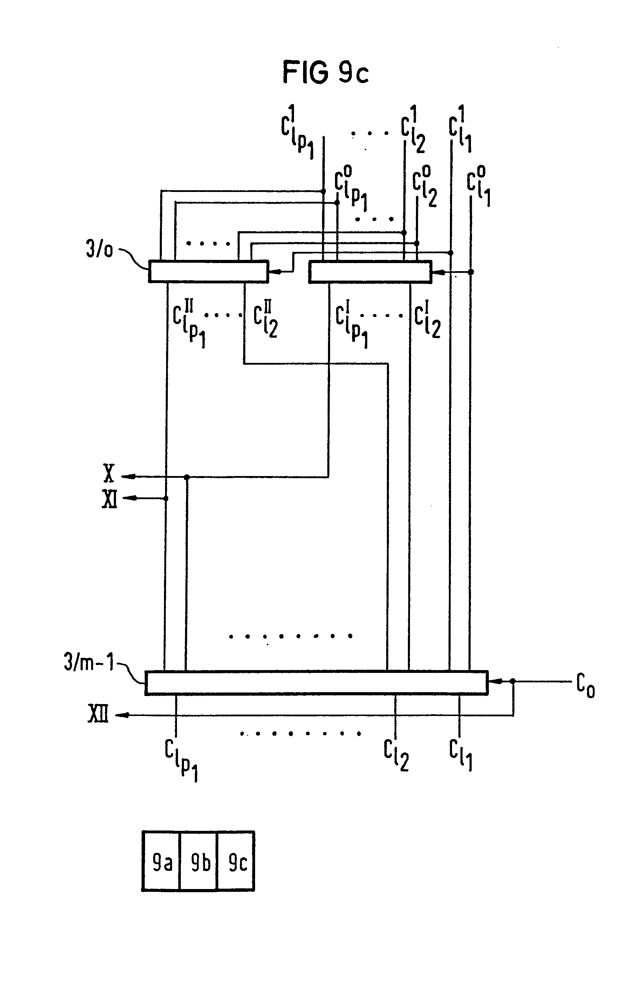

FIG 9 mit den Teilfiguren 9a, 9b und 9c zeigt in Anlehnung an die Tabelle von FIG 8 eine unvollständige Prinzipdarstellung der Bündelung in den Auswahlgruppen durch Auswahlschaltergruppen 3/0 bis 3/m-1 in den Stufen 0 bis m-1, wobei in allen Auswahlgruppen in der Stufe m-1 einheitlich die endgültige Entscheidung durch den externen Eingangsübertrag $C_0$ getroffen wird.

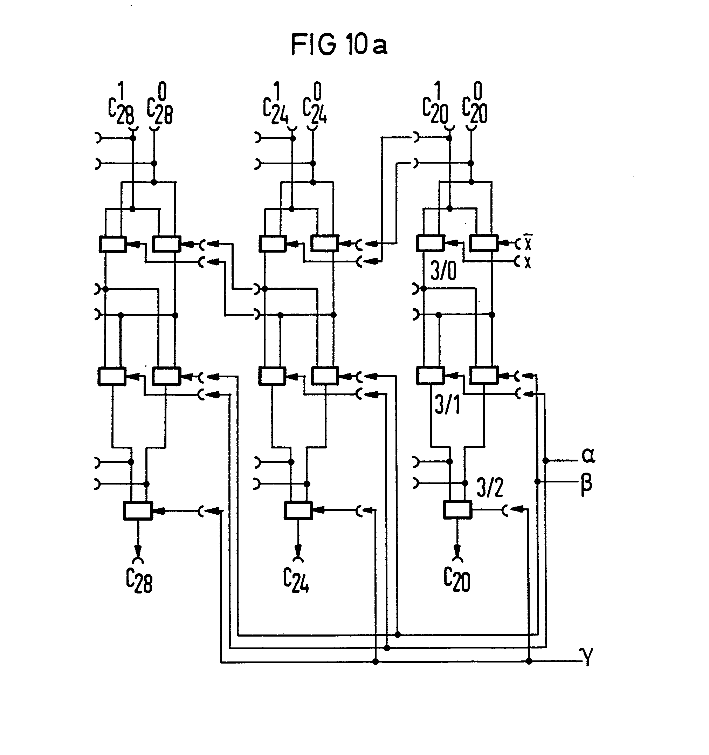

Jede Auswahlschaltergruppe 3/ . . . steht dabei für eine Anordnung von einem Bündel von einzelnen Auswahlschaltern für die einzelnen Signale. An den Eingängen der Entscheidungslogik liegen wiederum die von den Bitgruppen gelieferten alternativen Gruppenausgangsüberträge $C^0_i/C^1_i$ an. Die Kennzeichnung der Auswahlgruppen erfolgt durch untere Indizes, die von $I_1$ bis $I_{p1}$ für die niederwertigste Auswahlgruppe in FIG 9c und von $I_{p1 + \ldots + pi − pg}$ bis $I_{p1 + \ldots + pi + pj}$ für die höchstwertige Auswahlgruppe in FIG 10a reichen.

Innerhalb dieser Auswahlgruppen werden beispielsweise parallele Untergruppen gebildet, z.B. $C^1_{11}/C^0_{11}$ bis $C^0_{Ip1}/C^1_{Ip1}$ oder $C^0_{Ip1 + 1}/C^1_{Ip1 + 1}$ bis $C^0_{Ip1 + Ip2}/C^1_{Ip1 + Ip2}$, und innerhalb jeder Untergruppe jeweils die niedrigsten alternativen Überträge, z.B. $C^0_{11}$ bzw. $C^1_{11}$ oder $C^0_{Ip1 + 1}$ bzw. $C^1_{Ip1 + 1}$ mit den restlichen alternativen Überträgen zu Zwischenergebnissen, z.B. $C^I_{12}/C^{II}_{12}$ bis $C^I_{Ip1}/C^{II}_{Ip1}$ durch die Auswahlschaltergruppen 3/0 der Stufe 0 verknüpft. Diese Zwischenergebnisse einer oder mehrerer Untergruppen werden in der nächsten Stufe durch Auswahlschaltergruppen 3/1 mit den alternativen Zwischenergebnissen für die jeweils höchstwertigen alternativen Überträge, z.B. Steuereleitungen X und XI in FIG 9b und 9c, einer anderen Untergruppe zu weiteren alternativen Zwischenergebnissen verknüpft usw. Diese Bündelung wird von Stufe zu Stufe fortgesetzt, bis schließlich eine Endauswahl in der Stufe m-1 einheitlich für alle Gruppenausgangsüberträge $C_{11}$ bis $C_{Ip1 + \ldots + pj}$ durch den externen Eingangsübertrag $C_0$ getroffen werden kann.

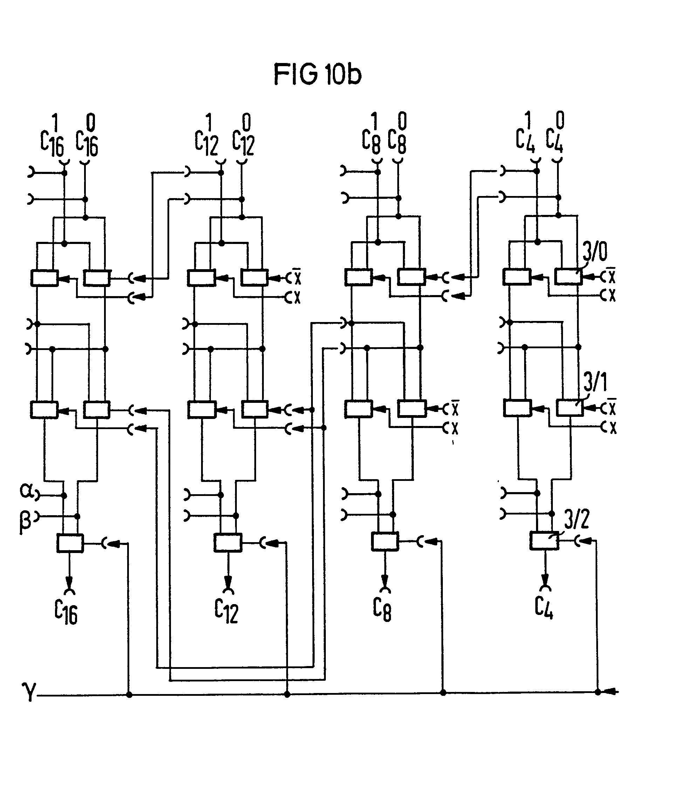

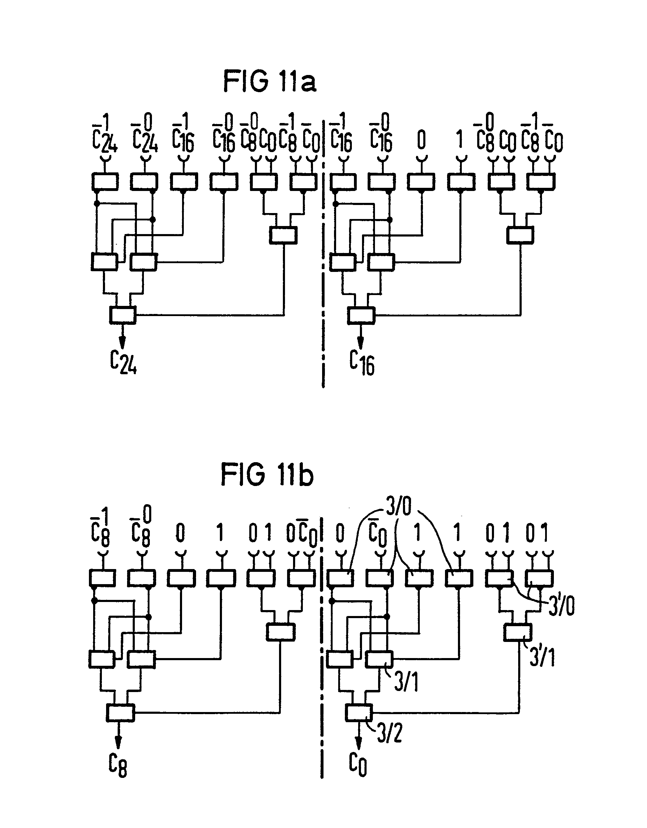

FIG 10 (zusammengesetzt aus FIG 10a und FIG 10b) sowie FIG 11 (zusammengesetzt aus FIG 11a und FIG 11b) zeigen in Anlehnung an FIG 4 weitere Ausführungsbeispiele für den Aufbau der Entscheidungslogik, der sich aus der Verwendung gleichartiger "Scheiben" als Bausteine entsprechend der bekannten Bit-Slice-Technik ergibt. Für jedes zu verarbeitende Paar von alternativen Gruppenausgangsüberträgen $C^0_4/C^1_4$ bis $C^0_{28}/C^1_{28}$ ist jeweils eine Scheibe vorgesehen, die jeweils aus zwei Schalterpaaren 3/0 und 3/1 für die alternativen Verknüpfungen und einem die endgültige Auswahl treffenden Schalter 3/2 besteht. Abweichend vom Ausführungsbeispiel gemäß FIG 4 werden dabei in Anlehnung an das Ausführungsbeispiel von FIG 9 alle die Endauswahl treffenden letzten Schalter jeder Scheibe parallel vom externen Eingangsübertrag $C_0$ auf der Leitung γ angesteuert.

Die unterschiedlichen Abhängigkeiten von niederwertigeren Überträgen werden im übrigen dadurch berücksichtigt, daß die Auswahlschalter 3/ . . . in den einzelnen Scheiben unterschiedlich von vorhergehenden Scheiben angesteuert werden, wenn sie für eine Verknüpfung benötigt werden. Ist letzteres nicht der Fall, wird die Steuerung der Auswahlschalter durch konstante Steuergrößen, die mit X und X gekennzeichnet sind, bestimmt. Diese fest vorgegebenen Steuergrößen weisen einen logischen Signalpegel 0 bzw. 1 auf. Mit Hilfe der festen Steuergrößen werden redundante Auswahlschalter 3/ . . . einer Scheibe neutralisiert, d.h. eine der beiden anliegenden Eingangsgrößen wird — einer festen Verdrahtung entsprechend — durchgeschaltet.

So sind beispielsweise die Steuereingänge der Schalter 3/0 und 3/1 der niederwertigsten Scheibe zur Erzeugung des Ausgangsübertrages $C_4$ mit neutralisierenden Steuersignalen X bzw. $\overline{X}$ belegt, da in dieser Scheibe lediglich eine Verknüpfung mit dem externen Eingangsübertrag $X_0$ erforderlich ist.

Zunächst werden jeweils in Untergruppen die Übertragssignale zweier Bitgruppen miteinander verknüpft. Die daraus entstehenden und die Endauswahl ermöglichenden alternativen Zwischenergebnissignale von $C^0_4/C^1_4$ und $C^0_8/C^1_8$ der niederwertigsten Untergruppe werden dann mit den Signalen für $C^0_{12}/C^1_{12}$ und mit den Zwischenergebnissignalen aus der Verknüpfung von $C^0_{12}/C^1_{12}$ und $C^0_{16}/C^1_{16}$ der nachfolgenden Untergruppe verknüpft, so daß auch für diese die Endauswahl möglich ist. Die aus dieser Verknüpfung entstehenden höchstwertigen alternativen Zwischenergebnisse werden dann über die Steuerleitungen α und β den übrigen Scheiben für die Ausgangsüberträge $C_{20}$ bis $C_{28}$ zugeführt, so daß auch hierfür die Endauswahl möglich wird, die dann einheitlich mit dem externen Eingangsübertrag $C_0$ herbeigeführt wird.

Das Beispiel in FIG 11 zeigt dagegen eine Entscheidungslogik, deren untereinander gleiche Scheiben so aufgebaut sind, daß jede Scheibe alle zu verarbeitenden alternativen Gruppenausgangsüberträge aufnehmen kann. Entsprechend der Stellung bzw. Wertigkeit innerhalb einer Gruppenfolge sind wegen fehlender Übertragssignale nicht belegbare Signaleingänge mit festen Eingangsgrößen beaufschlagt, um die Ansteuerung der nachfolgenden Auswahlschalter 3/1 und 3/2 der nachfolgenden Stufen sicherzustellen. Die Auswahlschalter 3'/0 für die beiden niederwertigsten Übertragungspaare einer jeden Scheibe sowie der diesen nachgeschaltete Auswahlschalter 3' sind vorzugsweise als "ODER"-Glieder bzw.

als sogenannte Wired-OR-Glieder ausgebildet. Im Beispiel sind negierte Übertragspaare werwendet. Außerdem werden im Gegensatz zu den vorhergehenden Ausführungsbeispielen Gruppenausgangsüberträge von 8-Bit-Verknüpfungseinheiten statt von 4-Bit-Verknüpfungseinheiten verwendet, was zu einem verringerten Schaltungsaufwand für die Entscheidunglogik führt.

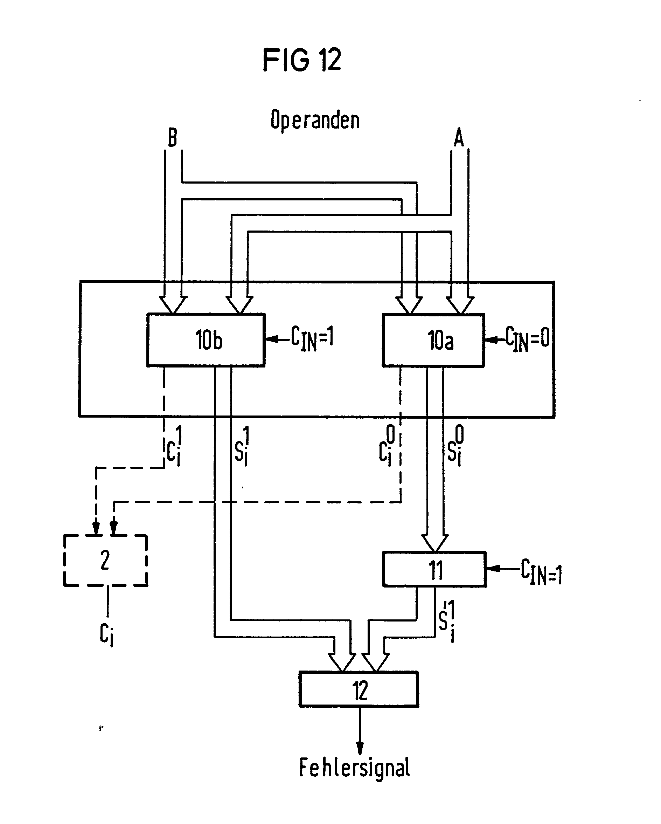

FIG 12 zeigt die Schaltungsanordnung einer Fehlerüberwachungseinrichtung, bei der die Verknüpfungseinheit nach FIG 1 zur Bereitstellung zweier alternativer Summen $S^0_i$ und $S^1_i$ verwendet wird. Diese Verknüpfungseinheit besteht beispielsweise aus zwei Volladdierern oder Arithmetik-Logik-Einheiten 10a und 10b, die mit komplementären Eingangsüberträgen 0 bzw. 1 beaufschlagt sind. Der Summenausgang $S^0_i$ des ersten Voladdierers 10a wird einem weiteren Addierer 11, beispielsweise einem Halbaddierer oder einer EX-OR-Schaltung, zugeführt. Dieser ist mit einem zum Eingangsübertrag des ersten Volladdierers 10a komplementären Eingangsübertrag $C_{IN} = 1$ beaufschlagt. Falls die Summierung im ersten und im zweiten Voladdierer 10a, 10b fehlerfrei durchgeführt wurde, ist am Ausgang des zweiten Volladdierer 10b erzeugten Summe entspricht. Die Ergebnisüberprüfung erfolgt bitweise in einem Vergleicher 12, der beispielsweise aus Äquivalenzgliedern aufgebaut ist. Bei Übereinstimmung ist ein entsprechendes Signal am Ausgang des Vergleichers 12 abgreifbar. Im anderen Fall erfolgt eine Fehlermeldung.

**Patentansprüche**

1. Parallelverknüpfungsschaltung mit verkürztem Übertragsdurchlauf für zwei binär codierte Operanden (A, B), die jeweils in einander entsprechende Bitgruppen von aufeinanderfolgenden Bitstellen unterteilt sind, und einen externen Eingangsübertrag ($C_0$), bestehend

aus einer der Anzahl der Bitgruppen je Operand entsprechenden Anzahl von Verknüpfungseinheiten (1), jede Verknüpfungseinheit (1) bestehend aus einstelligen Addierern (7) mit jeweils einem Summen- und einem Übertragsausgang für die Verknüpfung jeweils einer Bitstelle der beiden Operanden unabhängig von einem Eingangsübertrag, aus weiteren Addierern (8, 9, 10) zur Bildung alternativer Gruppenausgangsüberträge ($C^1_x$, $C^0_x$) abhängig von den Ausgangssignalen de einstelligen Addierer und von den beiden möglichen Werten des jeweiligen Gruppeneingangsübertrages ($C_4 \ldots C_{28}$) und zur Bildung der jeweiligen endgültigen Teilsumme abhängig vom jeweils ermittelten tatsächlichen Gruppeneingangsübertrag ($C_4 \ldots C_{28}$),

aus einer Entscheidungslogik (2) zur Ermittlung der jeweils tatsächlichen Gruppeneingangsüberträge ($C_4 \ldots C_{28}$) für die einzelnen Verknüpfungseinheiten und des Ausgangsübertrages (z.B. $C_{32}$) der Parallelverknüpfungsschaltung aus dem externen Eingangsübertrag ($C_0$) und den von den einzelnen Verknüpfungseinheiten jeweils gelieferten alternativen Gruppenausgangsüberträgen ($C^1_4$, $C^0_4 \ldots C^1_{32}$, $C^0_{32}$), dadurch gekennzeichnet,

daß die Entscheidungslogik (2) allein aus jeweils einen von den jeweils beiden angebotenen alternativen Gruppenausgangsüberträgen (z.B. $C^0_x$ oder $C^1_x$) wahlweise durchschaltenden Auswahlschaltern (3/0 bzw. 3/1 bzw. 3/2) besteht,

daß den jeweils die endgültige Auswahlentscheidung für einen tatsächlichen Gruppenausgangsübertrag (z.B. $C_x$) treffenden Auswahlschaltern (3/2), bis auf den für die niederwertigsten alternativen Gruppenausgangsüberträge ($C^0_4$, $C^1_4$), die jeweils zugehörigen beiden alternativen Gruppeneingangsüberträge (z.B. $C^0_x$, $C^1_x$) über stufenweise vorgeschaltete, pro Stufe jeweils Paare bildende weitere Auswahlschalter (3/1, 3/0) zugeführt werden,

daß an den die endgültige Entscheidung treffenden Auswahlschaltern (3/2) entweder der Eingangsübertrag ($C_0$) oder ein tatsächlicher, niedrigwertigerer Gruppeneingangsübertrag (z.B. $C_{12}$, $C_4$) als Steuersignal wirkt,

daß die Beschaltung der vorgeschalteten Auswahlschalter (3/ . . .) in der Weise erfolgt, daß bei Paaren von Auswahlschaltern in der ersten Stufe jedem Auswahlschalter jeweils beide alternativen Gruppenausgangsüberträge ($C^0_x$, $C^1_x$) als Eingangssignal zugeführt werden und daß jeweils bei Paaren von Auswahlschaltern in den weiteren Stufen jedem Auswahlschalter die alternativen Zwischenergebnisse der vorangehenden Stufe als Eingangssignale zugeführt werden und daß bei jedem Paar von Auswahlschaltern von einem Übertragspaar der niederwertigeren alternativen Gruppenausgangsüberträge oder von einem Signalpaar eines niederwertigeren alternativen Zwischenergebnisses jeweils ein Übertrag bzw. Zwischenergebnissignal als Steuersignal für den einen Auswahlschalter und der andere Übertrag bzw. das andere Zwischenergebnis als Steuersignal des anderen Auswahlschalters des Paares von Auswahlschaltern wirkt, so daß am Ausgang der die endgültige Entscheidung treffenden Auswahlschalter jeweils der tatsächliche Gruppeneingangsübertrag ($C_x$) zur Verfügung steht.

2. Parallelverknüpfungsschaltung nach Anspruch 1, dadurch gekennzeichnet, daß ausgehend von beliebigen, nicht unmittelbar benachbarten alternativen Gruppeneingangsüberträgen einschließlich des Eingangsübertrages ($C_0$) diese als Steuersignale in einer ersten Stufe an den jeweils zu den nächstnachfolgenden alternativen Gruppenausgangsüberträgen gehörenden Auswahlschalterpaaren zur Bildung entweder eines alternativen Zwischenergebnisses bzw. dem Auswahlschalter zur Bildung eines tatsächlichen Gruppeneingangsübertrages wirken, und daß in jeweils weiteren Stufen jeweils beliebige weitere, nicht unmittelbar benachbarte und in vorhergehenden Stufen noch nicht erfaßte alternative Gruppenausgangsüberträge einschließlich des Eingangsübertrages ($C_0$) bzw. die aus solchen alternativen Gruppenausgangsüberträgen abgeleiteten Zwischenergebnisse bzw. tatsächlichen Gruppeneingangsüberträge an den zu den jeweils nächst-nachfolgenden und im Falle vorhandener Zwischenergebnisse wieder nächst-nachfolgenden alternativen Gruppenausgangsüberträgen gehörenden entsprechenden Auswahlschaltern als Steursignale wirken, bis alle tatsächlichen Gruppeneingangsüberträge zur Verfügung stehen.

3. Parallelverknüpfungsschaltung nach Anspruch 2, dadurch gekennzeichnet, daß ausgehend von jedem zweiten benachbarten alternativen Gruppenausgangsüberträgen mit und ohne Eingangsübertrag ($C_0$) diese in der ersten Stufe an den zu den jeweils nächst-nachfolgenden alternativen Gruppenausgangsüberträgen gehörenden Auswahlschalterpaaren zur Bildung eines alternativen Zwischenergebnisses bzw. Auswahlschaltern zur Bildung eines tatsächlichen Gruppeneingangsüberträges und in den weiteren Stufen jeweils die zu den aus einer Modulo-2-Entwicklung der weiteren alternativen Gruppenausgangsüberträge mit und ohne Eingangsübertrag ($C_0$) hervorgehenden Gruppenausgangsüberträge bzw. zum Eingangsübertrag ($C_0$) gehörenden Zwischenergebnisse und/oder tatsächlichen Gruppeneingangsüberträge als Steuersignale wirken.

4. Parallelverknüpfungsschaltung nach einem der vorhergehenden Ansprüche, dadurch gekennzeichnet, daß für einen modulartigen Aufbau der Entscheidungslogik (2); in den einzelnen Zweigen der stufenweisegeschalteten Auswahlschalter für die Gruppenausgangsüberträge ($C_4^0$, $C_4^1$ bis $C_{28}^0/C_{28}^1$) jeweils eine gleiche Anzahl (z.B. 2) hintereinandergeschaltete Auswahlschalterpaare angeordnet sind, deren Steuereingänge

a) alternativ mit niederwertigen alternativen Gruppenausgangsüberträgen oder alternativen Zwischenergebnissen angesteuert werden, wenn das betreffende Auswahlschalterpaar zur Bündelung genutzt wird, oder

b) mit komplementären festen Steuergrößen belegt wird, um die Eingangssignale der Auswahlschalter weiterzulieten, wenn das betreffende Auswahlschalterpaar nicht zur Bündelung genutzt wird.

5. Parallelverknüpfungsschaltung nach einem der vorhergehenden Ansprüche, dadurch gekennzeichnet, daß die Verknüpfungseinheiten (1) jeweils zwei gleichartige parallele Addierwerke (8) als weitere Addierer aufweisen, an deren Übertragseingängen jeweils komplementäre feste Steuergrößen entsprechend den beiden möglichen Werten eines Eingangsübertrages ($C_{IN} = 0/1$) anliegen und daß die Ausgänge der beiden Addierwerke (8) neben dem jeweiligen alternativen Gruppenausgangsübertrag auch die zugehörigen alternativen Teilsummen liefern, die mit den Dateneingängen von weiteren Auswahlschaltern (4) verbunden sind, die abhängig von dem zutreffenden endgültigen Gruppeneingangsüberträg die jeweils zugehörige endgültige Teilsumme auswählen.

6. Parallelverknüpfungsschaltung nach einem der Ansprüche 1 bis 4, dadurch gekennzeichnet, daß die Verknüpfungseinheiten (1) ein erstes Addierwerk (10), dessen Übertragseingänge mit komplentären festen Steuergrößen entsprechend den beiden möglichen Werten eines Eingangsüertrages ($C_{IN} = 0/1$) beufschalgt werden und das lediglich die alternativen Gruppenausgangsüberträge (z.B. ($C_8^0$, $C_8^1$) ermittelt, und ein zweites Addierwerk (9), dessen Übertragseingang ($C_{IN}$) jeweils mit dem entsprechenden, den Gruppeneingangsübertrag (z.B. $C_4$) liefernden Ausgang der Entscheidungslogik (2) verbunden ist und das die jeweilige endgültige Teilsumme liefert, als weitere Addierer aufweist.

7. Parallelverknüpfungsschaltung nach einem der vorhergehenden Ansprüche, dadurch gekennzeichnet, daß die Verknüpfungseinheiten (1) jeweils einen ersten und einen zweiten Addierer (10a und 10b) mit komplementären Eingangsüberträgen ($C_{IN}$) = 0/1) aufweisen, daß die vom ersten Addierer (10a) ermittelte Teilsumme einem weiteren Addierer (11) mit einem zum ersten Addierer (10a) komplementären Eingangsübertrag zugeführt wird, dessen Ergebnis mit dem Teilergebnis des zweiten Addierers (10b) durch einen Vergleicher (12) bitweise verglichen wird.

**Revendications**

1. Circuit combinatoire fonctionnant en parallèle avec un cycle raccourci de transmission des reports pour deux opeŕrandes codés en binaire (A, B), qui sont subdivisés respectivement en des groupes de bits, qui se correspondent entre eux, de positions binaires successives, et un report externe d'entrée ($C_0$), constitué

par un nombre, qui correspond au nombre des groupes de bits pour chaque opérande, d'unités combinatoires (1), dont chacune est constituée par des additionneurs à un chiffre (7) comportant respectivement une sortie pour la somme et une sortie de report pour la combinaison respectivement d'une position binaire des deux opérandes, indépendamment d'un report d'entrée, par d'autrers additionneurs (8, 9, 10) servant à former d'autres reports de sortie de groupe ($C_x^1$, $C_x^0$) en fonction des signaux de sortie des additionneurs à un chiffre et des deux valeurs possibles du report respectif d'entrée de groupe ($C_4 \ldots C_{28}$) et pour la formation de la somme partielle finale respective en fonction du report d'entrée de groupe effectif ($C_4 \ldots C_{28}$), respectivement déterminé.

par une logique de décision (2) servant à déterminer les reports d'entrée de groupe effectifs respectifs ($C_4 \ldots C_{28}$) pour les différentes unités combinatoires et du report de sortie (par exemple $C_{32}$) du circuit combinatoire parallèle à partir du report d'entrée externe ($C_0$) et des reports alternatifs de sortie de groupe

## EP 0 123 921 B1

$(C_4^1, C_4^0 \ldots C_{32}^1, C_{32}^0)$, respectivement délivrés par les différentes unités combinatoires, caractérisé par le fait

que la logique de décision (2) est constituée, à elleseule, par un commutateur faisant partie de commutateurs de sélection (3/0) ou 3/1 ou 3/2), transmettant au choix respectivement les deux reports alternatifs de sortie de groupe qui apparaissent (par exemple $C_x^0$ ou $C_x^1$),

qu'aux commutateurs de sélection (3/2) prenant respectivement la décision définitive de sélection pour un report respectif d'entrée de groupe (par exemple $C_x$), mais pas pour les commutateurs de sélection concernant les reports alternatifs de sortie de groupe ($C_4^0, C_4^1$) de poids les plus faibles, sont envoyés les deux reports alternatifs associés de sortie de groupe (par exemple $C_x^0, C_x^1$) par l'intermédiaire d'autres commutateurs de sélection (3/1, 3/0) branchés en amont par étages et constituant respectivement des couples dans chaque étage,

que le report d'entrée ($C_0$) ou un report d'entrée de groupe effectif de poids plus faible (par exemple $C_{12}, C_4$) agit en tant que signal de commande sur les commutateurs de sélection (3/2) prenant la décision finale,

que le câblage des commutateurs de sélection (3/...) branché en amont est réalisé de telle sorte que, pour des couples de commutateurs de sélection dans le premier étage, respectivement les deux reports alternatifs de sortie de groupe ($C_x^0, C_x^1$) sont envoyés en tant que signal d'entrée et que respectivement dans le cas de couples de commutateurs de sélection dans les autres étages, les résultats intermédiaires alternatifs de l'étage précédent sont envoyés en tant que signaux d'entrée à chaque commutateur de sélection, et que pour chaque couple de commutateurs de seléction, parmi un couple formé par les reports alternatifs de sortie de groupe de poids inférieur ou parmi un couple de signaux d'un résultat intermédiaire alternatif de poids inférieur, respectivement un report ou un signal de résultat intermédiaire agit en tant que signal de commande pour un commutateur de sélection, et l'autre report ou l'autre résultat intermédiaire agit en tant que signal de commande de l'autre commutateur de sélection du couple de commutateurs de sélection, de sorte qu'à la sortie des commutateurs de sélection prenant la décision finale, on dispose respectivement du report respectif d'entrée de groupe ($C_x$).

2. Circuit combinatoire fonctionnant en parallèle suivant la revendication 1, caractérisé par le fait qu'à partir de reports alternatifs quelconques de sortie de groupe, non directement voisins, y compris le report d'entrée ($C_0$), ces reports agissent en tant que signaux de commande dans un premier étage sur les couples de commutateurs de sélection associés respectivement aux reports alternatifs de sortie de groupe immédiatement suivants, pour la formation d'un résultat intermédiaire alternatif, ou bien agissent sur le commutateur de sélection pour la formation d'un report d'entrée de groupe effectif, et que dans d'autres étages respectifs, respectivement d'autres reports alternatifs de sortie de groupe non directement voisins et non encore détectés dans des étages précédents, y compris le report d'entrée ($C_0$), ou les résultats intermédiaires ou des reports d'entrée de groupe effectifs dérivés de tels reports alternatifs de sortie de groupe, agissent en tant que signaux de commande sur les commutateurs de sélection correspondants associés aux reports alternatifs de sortie de groupe respectivement immédiatement suivants et, dans le cas de la présence de résultats intermédiaires, aux autres reports de sortie de groupe à nouveau immédiatement suivants, jusqu'à ce que tous les reports d'entrée de groupe effectifs soient disponibles.

3. Circuit combinatoire fonctionnant en parallèle suivant la revendication 2, caractérisé par le fait qu'à partir de chaque second report alternaif voisin de sortie de groupe avec et sans report d'entrée ($C_0$), ces reports agissent en tant que signaux de commande, dans le premier étage, sur les couples de commutateur de sélection associés aux reports alternatifs de sortie de groupe, immédiatement suivants, pour la formation d'un résultat intermédiaire alternatif ou sur des commutateurs de sélection pour la formation d'un report d'entrés de groupe effectif et, dans les autres étages, respectivement les reports de sortie de groupe obtenus à partir d'un développement modulo 2 des autres reports alternatifs de sortie de groupe avec et sans report d'entrée ($C_0$) ou les résultats intermédiaires associés au report d'entrée ($C_0$) ou les résultats intermédiaires associés au report d'entrée ($C_0$) et/ou des reports d'entrée de groupe effectifs agissent en tant que signaux de commande.

4. Circuit combinatoire fonctionnant en parallèle suivant l'une des revendications précédentes, caractérisé par le fait que pour une construction modulaire de la logique de décision (2), dans les différentes branches des commutateurs de sélection, branchés selon des étages, pour les reports de sortie de groupe ($C_4^0/ C_4^1$ à $C_{28}^0/C_{28}^1$) il est prévu respectivement un même nombre (par exemple 2) de couples de commutateurs de sélection branchés en série, dont les entrées de commande

a) sont commandées alternativement par des reports alternatifs de sortie de groupe de faible valeur ou par des résultats intermédiaires alternatifs, lorsque le couple considéré de commutateurs de sélection est utilisé pour la focalisation, ou

b) sont occupés par des grandeurs de commande fixes complémentaires pour la retransmission des signaux d'entrée des commutateurs de sélection, lorsque le couple considéré de commutateurs de sélection n'est pas utilisé pour la focalisation.

5. Circuit combinatoire fonctionnant en parallèle suivant l'une des revendications précédentes, caractérisé par le fait que les unités combinatoires (1) possèdent respectivement deux unités d'addition parallèles de même type (8) en tant qu'additionneurs supplémentaires, aux entrées de report sont appliquées des grandeurs de commande fixes complémentaires respectives, conformément aux deux valeurs possibles d'un report d'entrée ($C_{IN}$ = 0/1), et que les sorties des deux unités d'addition (8) délivrent

9

en dehors du report alternatif de sortie de groupe respectif, également les sommes partielles alternatives associées, qui sont liées aux entrées de données d'autres commutateurs de sélection (4), qui sélectionnent la somme partielle finale associée respective, en fonction du report d'entrée de groupe final considéré.

6. Circuit combinatoire fonctionnant en parallèle suivant l'une des revendications 1 à 4, caractérisé par le fait que les unités combinatoires (1) contiennent, comme autres additionneurs, une première unité d'addition (10), dont les entrés de report sont chargées par des grandeurs de commande fixes complémentaires en fonction de valeurs possibles d'un report d'entrée ($C_{IN}$ = 0/1) et que déterminent uniquement les report alternatifs de sortie de groupe (par exemple $C_8^0/C_8^1$), et une autre unité d'addition (9), dont l'entrée de report ($C_{in}$) est reliée respectivement à la sortie correspondante, qui délivre le report d'entrée de groupe (par exemple $C_4$), de la logique de décision (2) et délivre la somme partielle finale respective.

7. Circuit combinatoire fonctionnant en parallèle suivant l'une des revendications précédentes, caractérisé par le fait que les unités combinatoires (1) possèdent respectivement des premier et second additionneurs (10a et 10b) comportant des reports d'entrée complémentaires ($C_{IN}$ = 0/1), que la somme partielle déterminée par le premier additionneur (10a) est envoyée à un autre additionneur (11) possédant un report d'entrée complémentaire au premier additionneur (10a) et dont le résultat est comparé, bit-à-bit, au résultat partiel du second additionneur (10b) par un comparateur (12).

## Claims

1. Parallel connection circuit with shortened carry propagation for two binary coded operands (A, B) which are in each case subdivided into mutually corresponding bit groups of successive bit positions, and an external input carry ($C_0$), consisting

of a number, corresponding to the number of bit groups per operand, of connection units (1), each connection unit (1) consisting of one-digit adders (7) having in each case a sum output and a carry output for the connection of in each case one bit position of the two operands, independently of an input carry, and of further adders (8, 9, 10) for forming alternative group output carrys ($C_x^1$, $C_x^0$) in dependence on the output signals of the one-digit adders and on the two possible values of the respective group input carry ($C_4 \ldots C_{28}$) and for forming the respective final subtotal in dependence on the actual group input carry ($C_4 \ldots C_{28}$) in each case determined.

of a decision logic (2) for determining the actual group input carrys ($C_4 \ldots C_{28}$) in each case for the individual connection units and the output carry (for example $C_{32}$) of the parallel connection circuit from the external input carry ($C_0$) and the alternative group output carrys ($C_4^1$, $C_4^0 \ldots C_{32}^1$, $C_{32}^0$), in each case supplied by the individual connection units, characterized in that

the decision logic (2) only consists of selection switches (3/0 and 3/1 and 3/2, respectively) in each case optionally switching through one of the in each case two alternative group output carrys (for example $C_x^0$, $C_x^1$) offered,

in that the selection switches (3/2) in each case making the final selection decision for an actual group input carry (for example $C_x$), apart from that for the least significant alternative group output carrys ($C_4^0$, $C_4^1$), are supplied with the in each case associated two alternative group output carrys (for example $C_x^0$, $C_x^1$) via further selection switches (3/1, 3/0) in each case forming parts per stage and connected ahead stage by stage,

in that at the selection switches (3/2) making the final decision, either the input carry ($C_0$) or an actual low-significance group input carry (for example $C_{12}$, $C_4$) acts as control signal,

in that the selection switches (3/ . . .) connected ahead are connected up in such a manner that in the case of pairs of selection switches in the first stage, each selection switch is in each case supplied with two alternative group output carrys ($C_x^0$, $C_x^1$) as input signal and in that in each case in the case of pairs of selection switches in the further stages, each selection switch is supplied with the alternative intermediate results of the preceding stage as input signals and in that in the case of each pair of selection switches in each case a carry or intermediate results signal, respectively, of a carry pair of the lower-significance alternative group output carrys or of a signal pair of a lower-significance alternative intermediate result acts as control signal for one selection switch and the other carry or the other intermediate result, respectively, acts as control signal of the other selection switch of the pair of selection switches so that in each case the actual group input carry ($C_x$) is available at the output of the selection switches making the final decision.

2. Parallel connection circuit according to Claim 1, characterized in that starting with arbitrary not immediately adjacent alternative group output carrys including the input carry ($C_0$), these act as control signals in a first stage at the selection switch pairs belonging in each case to the next-following alternative output carrys, for forming either an alternative intermediate result or the selection switch for forming an actual group input carry, and in that in each case in further stages in each case arbitrary further not immediately adjacent alternative group output carrys not yet detected in the preceding stages, including the input carry ($C_0$) or the intermediate results derived from such alternative group output carrys or actual group input carrys act as control signals at the corresponding selection switches belonging to the in each case next-following, and in the case of existing intermediate results again next-following alternative group output carrys, until all actual group input carrys are available.

3. Parallel connection circuit according to Claim 2, characterized in that, starting with every second adjacent alternative group output carrys with and without input carry ($C_0$), these act as control signals in the first stage at the selection switch pairs belonging to the in each case next-following alternative group output carrys, for forming an alternative intermediate result, or selection switches for forming an actual group input carry, and in the further stages in each case the intermediate results and/or actual group input carrys belonging to the group output carrys resulting from a modulo-2 development of the further alternative group output carrys with and without input carry ($C_0$) or to the input carry ($C_0$).

4. Parallel connection circuit according to one of the preceding claims, characterized in that for a modular configuration of the decision logic (2) in each case an identical number (for example 2) of series-connected selection switch pairs are arranged in the individual branches of the selection switches connected stage by stage for the group output carrys ($C_4^0/C_4^1$ to $C_{28}^0/C_{28}^1$), the control inputs of which selection switch pairs

a) are alternatively driven with low-significance alternative group output carrys or alternative intermediate results when the selection switch pair concerned is used for grouping, or

b) has applied to it complementary fixed control quantities in order to forward the input signals of the selection switches when the selection switch pair concerned is not used for grouping.

5. Parallel connection circuit according to one of the preceding claims, characterized in that the connection units (1) in each case exhibit two similar parallel adding units (8) as further adders, at the carry inputs of which in each case complementary fixed control quantities corresponding to the two possible values of an input carry ($C_{IN} = 0/1$) are present and in that the outputs of the two adding units (8), in addition to the respective alternative group output carry, also supply the associated alternative subtotals which are connected to the data inputs of further selection switches (4) which select the in each case associated final subtotal in dependence on the relevant final group input carry.

6. Parallel connection circuit according to one of Claims 1 to 4, characterized in that the connection units (1) exhibit as further adders a first adding unit (10), to the carry inputs of which complementry fixed control quantities corresponding to the two possible values of an input carry ($C_{IN} = 0/1$) are applied and which only determines the alternative group output carrys (for example $C_8^0/C_8^1$) and a second adding unit (9), the carry input ($C_{IN}$) of which is in each case connected to the corresponding output, supplying the group input carry (for example $C_4$), of the decision logic (2) and which supplies the respective final subtotal.

7. Parallel connection circuit according to one of the preceding claims, characterized in that the connection units (1) in each case exhibit a first and a second adder (10a and 10b) having complementary input carrys ($C_{IN} = 0/1$), in that the subtotal determined by the first adder (10a) is supplied to a further adder (11) with an input carry complementary to the first adder (10a) the result of which input carry is compared bit by bit with the part-result of the second adder (10b) by a comparator (12).

FIG 1

FIG 2

| | | 31 30 29 28 | | 27 26 25 24 | | 23 22 21 20 | | 19 18 17 16 | | 15 14 13 12 | | 11 10 9 8 | | 7 6 5 4 | | 3 2 1 0 | |
|---|---|---|---|---|---|---|---|---|---|---|---|---|---|---|---|---|---|---|
| | A | 0 1 0 0 | | 0 1 0 1 | | 1 0 0 1 | | 0 1 1 0 | | 0 0 1 1 | | 0 0 1 0 | | 1 0 0 0 | | 0 0 1 0 | |
| | B | 0 0 1 1 | | 1 0 1 1 | | 0 0 1 1 | | 0 1 0 0 | | 1 1 0 1 | | 0 1 0 0 | | 0 1 1 1 | | 1 1 1 1 | |
| $C_{IN}=0$ | $C_{32}^{0}=0$ | 0 1 1 1 | $C_{28}^{0}=1$ | 0 0 0 0 | $C_{24}^{0}=0$ | 1 1 0 0 | $C_{20}^{0}=0$ | 1 0 1 0 | $C_{16}^{0}=1$ | 0 0 0 0 | $C_{12}^{0}=0$ | 0 1 1 0 | $C_{8}^{0}=0$ | 1 1 1 1 | $C_{4}^{0}=1$ | 0 0 0 1 | $S_{i}^{0}$ |
| $C_{IN}=1$ | $C_{32}^{1}=0$ | 1 0 0 0 | $C_{28}^{1}=1$ | 0 0 0 1 | $C_{24}^{1}=0$ | 1 1 0 1 | $C_{20}^{1}=0$ | 1 0 1 1 | $C_{16}^{1}=1$ | 0 0 0 1 | $C_{12}^{1}=0$ | 0 1 1 1 | $C_{8}^{1}=1$ | 0 0 0 0 | $C_{4}^{1}=1$ | 0 0 1 0 | $S_{i}^{1}$ |

EP 0 123 921 B1

## FIG 3

| 1 | | $C_{28}$ | $C_{24}$ | $C_{20}$ | $C_{16}$ | $C_{12}$ | $C_8$ | $C_4$ | $C_0$ | |
|---|---|---|---|---|---|---|---|---|---|---|
| 2 | $C_{IN}=0$ | $C_{28}^0=1$ | 0 | 0 | 1 | 0 | 0 | 1 | 0 | 0 |
| 3 | $C_{IN}=1$ | $C_{28}^1=1$ | 0 | 0 | 1 | 0 | 1 | 1 | | |
| 4 | $C_{IN}=0$ | 1 | 0 | 0 | 1 | 0 | 0 | 1 | 0 | 1 |
| 5 | $C_{IN}=1$ | 1 | 0 | 0 | 1 | 0 | 1 | | | |
| 6 | $C_{IN}=0$ | 1 | 0 | 0 | 1 | 0 | 1 | 1 | 0 | 2 |
| 7 | $C_{IN}=1$ | 1 | 0 | 0 | 1 | | | | | |
| 8 | Ergebnis | 1 | 0 | 0 | 1 | 0 | 1 | 1 | 0 | |

## FIG 5

B    A

13

P    G

6

5

$C^1$    $C^0$

# FIG 4

EP 0 123 921 B1

FIG 6

$B_7$ $A_7$  $B_6$ $A_6$  $B_5$ $A_5$  $B_4$ $A_4$

7    7    7    7

8    8

$C_{IN} = 1$    $C_{IN} = 0$

$C_8^1$  $C_6^1$    $C_8^0$  $C_6^0$

$S_7^1$ $S_7^0$  $S_6^1$ $S_6^0$  $S_5^1$ $S_5^0$  $S_4^1$ $S_4^0$

$C_{IN} = c_4$

4    4    4    4

$S_7$    $S_6$    $S_5$    $S_4$

EP 0 123 921 B1

FIG 7

EP 0 123 921 B1

FIG 8a

| | | | | | | |
|---|---|---|---|---|---|---|
| $c_{IN}=0$ | $c^O1_{p_1+p_2+\ldots+p_i+p_j}$ | $\ldots$ | $c^O1_{p_1+p_2+\ldots+p_i+2}$ | $c^O1_{p_1+p_2\ldots+p_i+1}$ $\ldots$ | $c^O1_{p_1+\ldots+p_i-p_g}$ | $\ldots$ $\ldots$ |
| $c_{IN}=1$ | $c^11_{p_1+p_2+\ldots+p_i+p_j}$ | $\ldots$ | $c^11_{p_1+p_2+\ldots+p_i+2}$ | $c^11_{p_1+p_2+\ldots+p_i+1}$ $\ldots$ | $c^11_{p_1+\ldots+p_i-p_g}$ | $\ldots$ $\ldots$ |
| $c_{IN}=0$ | $c^I1_{p_1+p_2\ldots+p_i+p_j}$ | $\ldots$ | $c^I1_{p_1+p_2+\ldots+p_i+2}$ | $c^O1_{p_1+p_2+\ldots+p_i+1}$ $\ldots$ | $c^O1_{p_1+\ldots+p_i-p_g}$ | $\ldots$ $\ldots$ |
| $c_{IN}=1$ | $c^{II}1_{p_1+p_2+\ldots+p_i+p_j}$ | $\ldots$ | $c^{II}1_{p_1+p_2+\ldots+p_i+2}$ | $c^11_{p_1+p_2+\ldots+p_i+1}$ $\ldots$ | $c^11_{p_1+\ldots+p_i-p_g}$ | $\ldots$ $\ldots$ |
| $c_{IN}=0$ | $c^{III}1_{p_1+p_2+\ldots+p_i+p_j}$ | $\ldots$ | $c^{III}1_{p_1+p_2+\ldots+p_i+2}$ | $c^{III}1_{p_1+p_2+\ldots+p_i+1}$ | $c^O1_{p_1+\ldots+p_i-p_g}$ | $\ldots$ $\ldots$ |
| $c_{IN}=1$ | $c^{IV}1_{p_1+p_2+\ldots+p_i+p_j}$ | $\ldots$ | $c^{IV}1_{p_1+p_2+\ldots+p_i+2}$ | $c^{IV}1_{p_1+p_2+\ldots+p_i+1}$ $\ldots$ | $c^11_{p_1+\ldots+p_i-p_g}$ | $\ldots$ $\ldots$ |
| | $\vdots$ | | $\vdots$ | $\vdots$ | $\vdots$ | |
| $c_{IN}=0$ | $c^R1_{p_1+p_2+\ldots+p_i+p_j}$ | $\ldots$ | | $c^R1_{p_1+p_2+\ldots+p_i+1}$ $\ldots$ | $c^R1_{p_1+\ldots+p_i-p_g}$ | $\ldots$ |
| $c_{IN}=1$ | $c^S1_{p_1+p_2+\ldots+p_i+p_j}$ | $\ldots$ | | $c^S1_{p_1+p_2+\ldots+p_i+1}$ $\ldots$ | $c^S1_{p_1+p_2+\ldots+p_i-p_g}$ | $\ldots$ |
| | $c1_{p_1+p_2+\ldots+p_i+p_j}$ | $\ldots$ | | $c1_{p_1+p_2+\ldots+p_i+1}$ $\ldots$ | $c1_{p_1+\ldots+p_i-p_g}$ | $\ldots$ |

EP 0 123 921 B1

# FIG 8b

| | | | | | | | |
|---|---|---|---|---|---|---|---|
| $c^O_{1_{p_1+p_2}}$ | ... | $c^O_{1_{p_1+2}}$ | $c^O_{1_{p_1+1}}$ | $c^O_{1_{p_1}}$ | ... | $c^O_{1_2}$ | $c^O_{1_1}$ | O |
| $c^1_{1_{p_1+p_2}}$ | ... | $c^1_{1_{p_1+2}}$ | $c^1_{1_{p_1+1}}$ | $c^1_{1_p}$ | ... | $c^1_{1_2}$ | $c^1_{1_1}$ | |
| $c^I_{1_{p_1+p_2}}$ | ... | $c^I_{1_{p_1+2}}$ | $c^O_{1_{p_1+1}}$ | $c^I_{1_{p_1}}$ | ... | $c^I_{1_2}$ | $c^O_{1_1}$ | 1 |
| $c^{II}_{1_{p_1+p_2}}$ | ... | $c^{II}_{1_{p_1+2}}$ | $c^1_{1_{p_1+1}}$ | $c^{II}_{1_{p_1}}$ | ... | $c^{II}_{1_2}$ | $c^1_{1_1}$ | |
| $c^{III}_{1_{p_1+p_2}}$ | ... | $c^{III}_{1_{p_1+2}}$ | $c^{III}_{1_{p_1+1}}$ | $c^I_{1_{p_1}}$ | ... | $c^I_{1_2}$ | $c^O_{1_1}$ | 2 |
| $c^{IV}_{1_{p_1+p_2}}$ | ... | $c^{IV}_{1_{p_1+2}}$ | $c^{IV}_{1_{p_1+1}}$ | $c^{II}_{1_{p_1}}$ | ... | $c^{II}_{1_2}$ | $c^1_{1_1}$ | |
| $\vdots$ | | $\vdots$ | $\vdots$ | $\vdots$ | | $\vdots$ | $\vdots$ | |
| $c^{III}_{1_{p_1+p_2}}$ | ... | $c^{III}_{1_{p_1+2}}$ | $c^{III}_{1_{p_1+1}}$ | $c^I_{1_{p_1}}$ | ... | $c^I_{1_2}$ | $c^O_{1_1}$ | |
| $c^{IV}_{1_{p_1+p_2}}$ | ... | $c^{IV}_{1_{p_1+2}}$ | $c^{IV}_{1_{p_1+1}}$ | $c^{II}_{1_{p_1}}$ | ... | $c^{II}_{1_2}$ | $c^1_{1_1}$ | m−1 |
| $c_{1_{p_1+p_2}}$ | ... | $c_{1_{p_1+2}}$ | $c_{1_{p_1+1}}$ | $c_{1_{p_1}}$ | ... | $c_{1_2}$ | $c_{1_1}$ | |

| 8a | 8b |
|---|---|

z.B. $C_O = O$ ⟵

8

## FIG 9a

$c_{l_{p_1+p_2+...+p_i+2}}^1$

$c_{l_{p_1+p_2+...+p_i+p_j}}^0$

$c_{l_{p_1+p_2+...p_i+2}}^0$

$c_{l_{p_1+p_2+...+p_i+p_j}}^1$

$c_{l_{p_1+p_2+...+p_i+1}*}^1$

$c_{l_{p_1+p_2+...+p_i+1}*}^0$

3/0

$c_{l_{p_1+...+p_i+2}}^{II}$

$c_{l_{p_1+...p_i+2}}^I$

$c_{l_{p_1+p_2+...+p_i+p_j}}^{II}$

$c_{l_{p_1+...p_i+p_j}}^I$

$c_{l_{p_1+...p_i-p_g}}^1$

$c_{l_{p_1+...+p_i-p_g}}^0$

3/1

$c_{l_{p_1+...p_i+p_j}}^{IV}$

$c_{l_{p_1+...p_i+1}}^{IV}$

$c_{l_{p_1+p_2+...+p_i+1}}^{III}$

$c_{l_{p_1+p_2+...+p_i+1}}^{III}$

$c_{l_{p_1+p_2+...+p_i+p_j}}^S$

$c_{l_{p_1+p_2+...+p_i+1}}^S$

$c_{l_{p_1+p_2+...+p_i+p_j}}^R$

$c_{l_{p_1+p_2+...+p_i-p_g}}^S$

$c_{l_{p_1+p_2+...+p_i+1}}^R$

$c_{l_{p_1+p_2+...+p_i-p_g}}^R$

3/m-1

XIII

$c_{l_{p_1+p_2+...+p_i+p_j}}$

$c_{l_{p_1+p_2+...+p_i+1}}$

$c_{l_{p_1+p_2+...+p_i-p_g}}$

| 9a | 9b | 9c |

# FIG 9b

# FIG 9c

# FIG 10 a

## FIG 10b

## FIG 11a

## FIG 11b

# FIG 12

Operanden

B                                    A

| 10b | $C_{IN}=1$ | 10a | $C_{IN}=0$ |

$C_i^1$          $S_i^1$          $C_i^0$          $S_i^0$

2

$C_i$

| 11 | $C_{IN}=1$ |

$S_i'^1$

| 12 |

Fehlersignal